Europäisches Patentamt

European Patent Office

Office européen des brevets

(19)

(11)     EP 1 574 096 B1

(12)     EUROPEAN PATENT SPECIFICATION

(45) Date of publication and mention
of the grant of the patent:
**08.11.2006   Bulletin 2006/45**

(51) Int Cl.:
*H04Q 7/36* (2006.01)        *H04B 7/26* (2006.01)

(21) Application number: **02808263.4**

(22) Date of filing: **19.12.2002**

(86) International application number:
**PCT/EP2002/014603**

(87) International publication number:
**WO 2004/057894 (08.07.2004 Gazette 2004/28)**

(54) **ADAPTIVE CONTROL METHOD FOR OPERATING COMMUNICATIONS ENVIRONMENTS**

ADAPTIVE STEUERUNG FÜR DEN BETRIEB VON KOMMUNIKATIONSUMGEBUNGEN

PROCEDE DE REGULATION ADAPTATIF POUR EXPLOITER DES ENVIRONNEMENTS DE COMMUNICATIONS

(84) Designated Contracting States:
**AT BE BG CH CY CZ DE DK EE ES FI FR GB GR IE IT LI LU MC NL PT SE SI SK TR**

(43) Date of publication of application:
**14.09.2005   Bulletin 2005/37**

(73) Proprietor: **TELEFONAKTIEBOLAGET LM ERICSSON (publ)**
**164 83 Stockholm (SE)**

(72) Inventors:
• **HILDEBRAND, Uwe**
**91058 Erlangen (DE)**

• **JECK, Michael**
**55122 Mainz (DE)**

(74) Representative: **Röthinger, Rainer**
**c/o Wuesthoff & Wuesthoff**
**Patent- und Rechtsanwälte**
**Schweigerstrasse 2**
**81541 München (DE)**

(56) References cited:
**EP-A- 0 996 301          WO-A-02/47357**
**WO-A-95/17077          GB-A- 2 313 255**
**US-A- 5 034 993          US-A- 6 122 270**
**US-A- 6 130 886**

EP 1 574 096 B1

**Description**

**FIELD OF THE INVENTION**

The present invention relates, in general, to an operation of a communications environment wherein communications resources provided for a first communications standard are utilized for communications according to a second communications standard and wherein the use of the first communications resources for communications according to the first communications standard is controlled in dependence of communications to be performed according to the second communications standard. In particular, the present invention particularly relates an operation of different communications environments in a common frequency range and, in particular, to TDMA based communications such as used in a GSM/GPRS communications environment in a W-CDMA based communications environment like UMTS.

**BACKGROUND OF THE INVENTION**

The increasing amount of communications in communications environments often lead to problems with respect to an efficient use of transmission capacities and transmission rates.
Within the framework of the introduction of UMTS communications environments, new frequency spectra have been allocated for so-called 3G (third generation) mobile communication systems (for example the W-CDMA based UMTS Terrestrial Radio Access Network UTRAN). In particular, the new frequency spectra have been allocated such that frequency spectra already allocated for 2G (second generation) communications environments, such as GSM networks, are not cooperatively used and affected. As a result, specific frequencies are associated to each communications environment possibly leading to transmission capacity problems in a communications environment in case the allocated frequencies are not sufficient.
In order not to restrict a communications environment to specific frequencies, frequencies can be commonly used by different communications environments. For example, in the United States of America it can be expected that 3G communications environments will share the same frequency spectrum with 2G communications environments, such as the 1.900 MHz PCS frequency bands. Further, in Europe it is discussed that a frequency spectrum presently used for 2G communications environments, namely the 1.800 MHz frequency band, could be also allocated to 3G communications environments. These issues will become more relevant when 3G communications environments will successively replace 2G communications environments.
Similar problems will arise during initial phases for the introduction of 3G communications environments where transmission capacity demands will be low such that the respective frequency spectrum can be used for different communications purposes. For example, it might be possible that in an initial phase a frequency spectrum allocated to a 3G communications environment is desired to be used for transmissions in a 2G communications environment.
An approach is to operate 2G and 3G communications environments in co-existence, i.e. both communications environments are allowed to use the same frequency spectrum or frequency band at the same time. As a result, significant radio interferences between both communications environments will occur. Further, sharing of common frequency resources exhibiting radio signal interferences requires at least a complex power control for both the 2G and 3G communications environments. Moreover, an adaptation of the frequency planning of at least one of the communications environments will be necessary due to the different standards defined for example with respect to the allocation of physical channels and mapping of transport channels onto physical channels.
Further, different communications environments provide for enhanced transmission rates, mostly for specific communications purposes, such as the so-called High Speed Packet Downlink Access (HSDPA) in an UMTS communications environment. Here, specific frequencies are reserved for such high-speed communications which possibly leads to a sub-optimal transmission rates e.g. if large amounts of data are to be communicated in a short period of time.
United States Patent No. US-A-6 130 886 discloses to use a series of first time frames, instances of which are separated by a single gap, and a series of second time frames to incorporate an integrated communication system. A composite time frame, derived from the supported protocols, is used to carry those two series of time frames.
International Patent Applications WO 95/17077 and WO 02/47357 describe two methods of frequency sharing to support more than one protocol at the same time and within the same region.

**OBJECT OF THE INVENTION**

The object of the present invention is to provide for solutions to overcome the above named problems concerning transmission capacities and transmission rates. In particular the present invention should allow communications within different communications environments or in a single communications environment which are based on different standards in a common frequency range, preferably avoiding the above named problem of radio signal interferences and drawbacks resulting there from. In greater detail, the present invention should allow communications of a TDMA based communications environment (e.g. GSM/GPRS communications environment) to be accomplished in the same frequency range used by a W-CDMA based communications environment (e.g. UMTS) and communications based on FDD in a communications environment to be performed in the same frequency range used for communications based on TDD in the same communications environment.

## SHORT DESCRIPTION OF THE INVENTION

To achieve the above object, the present invention teaches a method for operating a first communications environment for which first communication resources are provided for communications according to a first communications standard type. The method comprises using the first communication resources for communications according to the first communications standard type; using the first communications resources for communications according to a second communications standard type; and controlling the use of the first communications resources as being used for communications according to the first communications standard type in dependence of communications to be performed according to the second communications standard type. The method is characterized by firstly communicating according to the first communications standard type by using a first frame structure including at least one transmission gap, secondly controlling the use of the first communication resources by controlling at least one of a number and duration of the at least one transmission gap, and thirdly using the at least one transmission gap for communications according to the second communications standard type.

The expression "communications environment" will refer to environments which provide for communications by means of communications systems, communications networks, communications units, communications devices and the like as well as to methods used therein for communications. The expression "communications standard" will refer to standards, specifications, definitions and the like according to which communications is performed in a communications environment.

A communications environment as provided herein is adapted to utilize first communications resources for communications according to a first communications standard type for communications according to a second communications standard type, and to control the use of the first communications resources for communications according to the first communications standard type in dependence of communications to be performed according to the second communications standard type. The environment is characterized in that firstly the first communications resources comprise a first frame structure including at least one transmission gap, secondly the communications environment is adapted to control the use of the first communications resources by controlling at least one of a number and duration of the at least one transmission gap, and thirdly the communications environment is adapted to control the use of the at least one transmission gap for communications according to the second communications standard type.

According to a preferred embodiment, second communications resources for communications according to the second communications standard are also used for communications according to the first communications standard wherein the use of the second communications resources for communications according to the second communications standard is controlled in dependence of communications to be performed according to the first communications standard. Here, the second communications environment is also controlled to provide at least some of its communications capacity for communications according to the first communications standard.

In the latter case it is possible to further control the use of the second communications resources for communications according to the first communications standard in dependence of communications to be performed according to the second communications standard. This avoids using communications capacities of the second communications resources for communications according to the second communications standard essentially without impairing communications according to the first communications standard.

For all above embodiments, the first communications resources can include a first frequency range, while, as far as applicable, the second communications resources can include a second frequency range. Preferably, the first and the second frequency range overlap at least partially. In such a case, the overlapping frequency range can be referred to as frequency range for mixed communications. The term "frequency range" as used herein also refers to single frequencies, frequency bands, multiple separated frequencies, multiple separated frequency band etc.

According to a preferred embodiment, the method according to the present invention is carried out with respect to a geographical area for which both communications according to the first communications standard and communications according to the second communications standard are provided. Examples for such a geographical area include broadcast cells of communications environments.

Parameters for carrying out the adaptive control method according to the present invention include at least one of a current communications demand, expected communications and available communications resources for communications each thereof according to the first and/or second communications standard(s).

In a preferred embodiment, the first communications resources is comprised by a first communications environment, which provides for communications according to the first communications standard, while - if applicable - the second communications resources can also be comprised by the first communications environment. Thus, the first communications environment can provide for both communications according to the first communications standard and communications according to the second communications standard.

In a another preferred embodiment, the first communications resources is comprised by a first communications environment, which provides for communications according to the first communications standard, while - if applicable - the second communications resources can also be comprised by a second communications environment. Thus, the first communications environment can provide for communications according to the first communications standard while the second communications environment can support communications according to the second communications standard.

For implementing the adaptive mixed communications control according to the present invention, the first and/or second communications environment(s) can receive information indicating the above control parameter(s). This allows controlling of communications capacities of communications environments for mixed communications by the respective communications environment on its own.

In view of demands for communications according to the first and/or second communications standard(s), only communications according to the first communications standard, or only communications according to the second communications standard, or communications according to the first communications standard and communications according to the second communications standard can be provided.

In order to avoid a negative impact on communications according to one communications standard by allocating communications resources originally provided for that communications to communications according to another communications standard it is possible to prioritize communications according to the first communications standard in relation to communications according to the second communications standard and/or vice versa.

Further, the present invention provides a communications environment, user equipment, radio base stations and computer program products as defined in the claims.

## SHORT DESCRIPTION OF THE FIGURES

In the following description of preferred embodiments, it is referred to the enclosed drawings wherein:

Fig. 1          illustrates a frame structure for uplink communications in an UMTS communications environment,

Fig. 2          illustrates a frame structure for downlink communications in an UMTS communications environment,

Fig. 3          illustrates a multiframe structure for GPRS communications,

Fig. 4          illustrates a compressed mode transmission in an UMTS communications environment,

Fig. 5          illustrates W-CDMA frame structure for uplink compressed transmissions in an UMTS communications environment,

Fig. 6          illustrates W-CDMA frame structure types in downlink compressed transmissions in an UMTS communications environment,

Fig. 7          illustrates methods for transmission gap positioning in compressed mode transmissions in an UMTS communications environment,

Fig. 8          illustrates different transmission gap positions in compressed mode transmissions in an UMTS communications environment,

Fig. 9          illustrates a mapping of the TDMA frame structure shown in fig. 3 and W-CDMA frame structure shown in fig. 5 and 6,

Fig. 10          illustrates a modified TDMA frame structure usable for mapping to the W-CDMA frames structure shown in fig. 5 and 6,

Fig. 11          is a generalized illustration of mapping of a second frame structure of a second communications environment to a first frame structure of a first communications environment,

Fig. 12          illustrates single-mode TDMA and W-CDMA radio base stations according to the present invention,

Fig. 13          illustrates a dual-mode radio base station according to the present invention,

Fig. 14        illustrates a variable duplex distance for a FDD/TDD spectrum sharing according to the present invention,

Fig. 15        illustrates a conventional TDD frame structure,

Fig. 16        illustrates a TDD frame structure for TDD/FDD spectrum sharing according to the present invention,

Fig. 17        is a generalized illustration of mapping of a second frame structure to a first frame structure of a common communications environment,

Fig. 18        illustrates allocation of dedicated and shared frequency ranges to UMTS and GSM/GPRRS communications environments,

Fig. 19        illustrates a deployment example for the adaptive control of mixed communications according to the present invention,

Fig. 20        illustrates a flowchart for the adaptive control of mixed communications according to the present invention,

Fig. 21        illustrates implementations of the adaptive control of mixed communications according to the present invention,

Fig. 22        illustrates a mixed communications operation selection according to the present invention,

Fig. 23        illustrates a graph showing parameters for the adaptive control of mixed communications according to the present invention and resulting mixed communications modes,

Fig. 24        illustrates a further graph showing parameters for the adaptive control of mixed communications according to the present invention and resulting mixed communications modes, and

Fig. 25 to 28    illustrate different configurations for mapping the TDMA frame structure shown in fig. 3 and the W-CDMA frame structure shown in fig. 5 and 6 for the adaptive control of mixed communications according to the present invention.

### Description of preferred embodiments

#### Mixed GSM/(E)GPRS and W-CDMA communications within a shared frequency range

The following description is given with respect to TDMA and W-CDMA communications environments. Examples for such communications environments include GSM/GPRS communications environments and UMTS communications environments. The principles and embodiments of the present invention given with respect to these specific communications environments also apply for other scenarios where different communications environments, i.e. communications environments according to different standards, or a different single communications environment share a same frequency spectrum or frequency band for its communications. In greater detail, the present invention will allow for a co-existence and integral cooperation of different communications environments and of different communications standards in single communications environment.

Referring to GSM/GPRS and UMTS communications environments, definitions, symbols and abbreviations will be used which are in a line with the specifications by the third generation partnership project 3GPP™.

#### GSM/GPRS communications via an UMTS communications environment

In the following embodiments, the first and second communications standards, namely UMTS and GSM/GPRS standards, are defined for different communications environment, namely an UMTS communications environment and a GSM/GPRS communications environment.

In order to reduce transmission times for radio signal transmissions in a 3G communications environment (e.g. UMTS) a so-called compressed mode has been defined by the third generation partnership project 3GPP™. In the compressed mode which is applicable for both uplink and downlink communications so-called transmission gaps are introduced in frame structures during which no data are transmitted. That means that during some periods in a frame structure no usable data will be communicated between user equipment UE (such as a mobile telephone) and an associated radio base station (i.e. so-called nodes according to the UMTS specifications functionally corresponding to a base transceiver station BTS in a GSM communications environment). Usable data, as used in this context, refers to data which are usable by a user of a user equipment, such as voice messages, fax, e-mail, alphanumerical and/or graphical data, video and/or audio data and the like.

In principle, such transmissions gaps of one communications environment can be used for communications in another communications environment. For example, GSM/GPRS communications transmissions can be executed during transmissions gaps of an UMTS communications environment.

One of the basic ideas employed in the preferred embodiments is to utilize transmission gaps which occur in the compressed mode specified for UMTS to execute GSM/GPRS communications when UMTS and GSM/GPRS communications environments are operated in the same frequency range. As a result, the common frequency resources are shared between both communications environments by time multiplexing.

In an UMTS communications environment, comparable frame structures are used for uplink and downlink communications whereas different multiplex methods are used. Downlink communications are performed on the basis of time multiplexing, while uplink communications employ I/Q multiplexing.

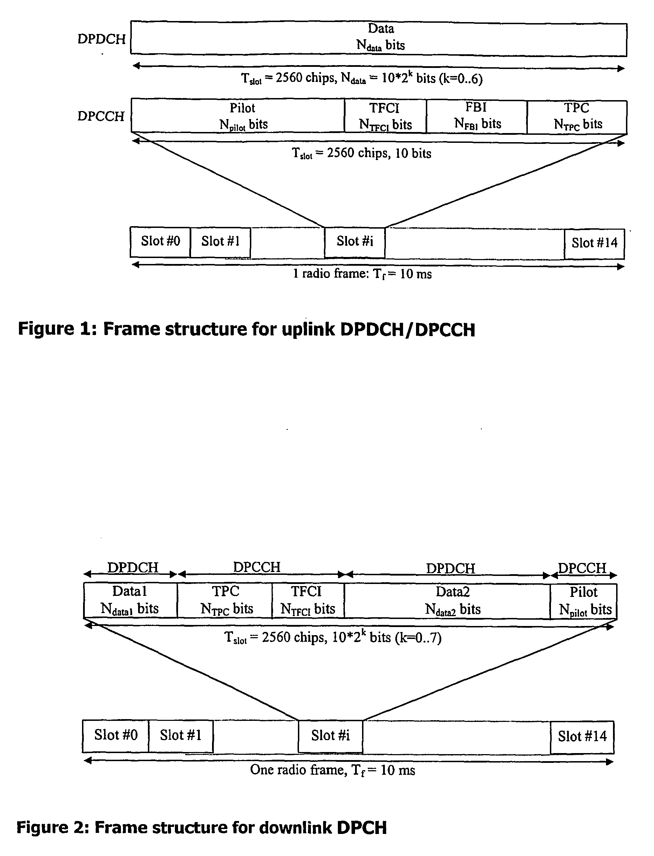

As illustrated in fig. 1, a frame used for uplink communications comprises several slots which are structured in dependence of data (e.g. speech or content data) and control signals. For data transmissions, slots of a frame for uplink communications comprises the upper structure shown in fig. 1. Here, each slot comprises a plurality of data bits which are transmitted in a respective frame via a dedicated physical data channel DPDCH.

For control signal transmissions in uplink communications, the slots of a frame comprise the structure shown in the middle of fig. 1. Here, each slot comprises several pilot bits, a transport format combination indicator TFCI, feedback information FBI data and transmit power control TPC data. Frames comprising such slots are communicated via a dedicated physical control channel DPCCH. As a result, for such uplink communications in a UMTS communications environment DPDCH and DPCCH are I/Q multiplexed within each frame.

In contrast thereto, downlink communications in a UMTS communications environment for DPDCH and DPCCH are multiplexed in the time domain. Thus, downlink DPCH can be seen as time multiplex of uplink DPDCH and uplink DPCCH. As illustrated in fig. 2, a frame used in downlink communications comprises several slots having the structure shown in this figure. Each slot comprises first data (data 1), transmit power control TPC data, transport format combination indicator TFCI data, second data (data 2) and pilot data.

GPRS has been defined for GSM communications environment and uses a packet-mode technique to communicate packets of data (e.g. content data) by means of radio signals in the GSM communications environment, for example to/from a user equipment UE or mobile station MS. For GPRS, which has to be understood to include EGPRS (enhanced GPRS), new physical channels or logical channels are defined, wherein uplink and downlink channels are allocated separately. For communications by means of GPRS, i.e. transmissions of data packets, packet data channels PDCHs are used for uplink and downlink communications.

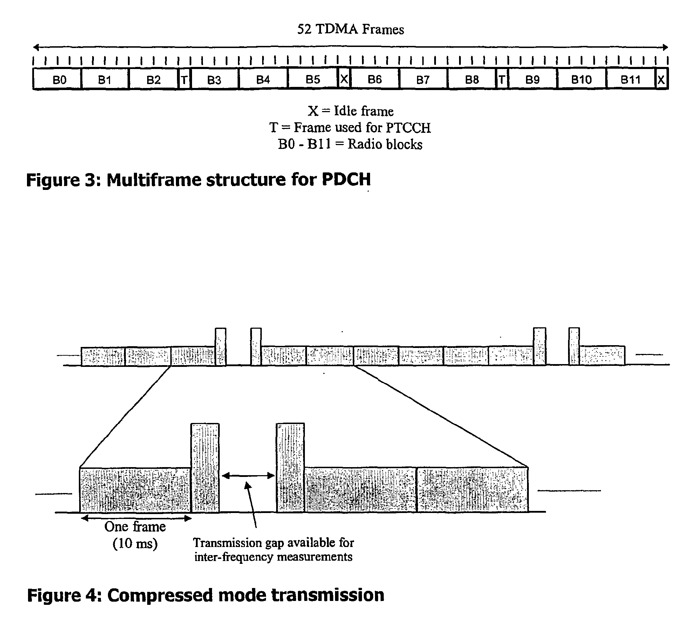

For mapping in time of the logical channels to a physical channel used for GPRS, a so-called packet data channel PDCH, a multiframe structure shown in fig. 3, is defined. The multiframe structure for a PDCH consists of 52 TDMA frames including 12 radio blocks B0, ..., B11 each thereof including 4 frames, 2 idle frames X and 2 frames T used for the so-called packet timing advance control channel PTCCH for timing control purposes. The length of the multiframe structure, i.e. of 52 TDMA frames, is 240 ms.

By means of respective physical channels it would be also possible to perform more or all communications in a manner comparable to GPRS by means of data packet transmissions. In principle, a mapping of packet data is also possible for any other channel used in a GSM communications environment, such as PBCCH, PCCCH, PACCH, PDTCH, CFCCH, CSCH, CPBCCH, CPCCCH, PACCH, CTSCCH and CTS which also use a multiframe structure of 52 TDMA frames. Further, mapping can be contemplated for other channels of a GSM communications environment which are based on different multiframe structures including 26 TDMA frames (e.g. TCH, FACCH) or 51 TDMA frames (e.g. BCCH, CCCH, SDCCH, PBCCH and PCCCH). Although such data packet based transmissions will require some modifications of transmission standards and specifications of today's GSM based communications environments, this is important to notice since the use of data packet transmissions will allow utilizing idle periods in one communications environment (e.g. transmission gaps TGs in an UMTS communications environment) for communications in another communications environment. As a result, employing a broader range of data packet based transmissions in a communications environment will allow for performing a higher amount of transmissions of that communications environment in another communications environment during its idle periods.

As illustrated in fig. 4 for UMTS communications environments a so-called compressed mode is defined wherein slots having a transmission gap length TGL are not used for transmissions of data. The term transmission gap length TGL defines the number of consecutive empty slots (i.e. slots without usable data) which can be obtained with a transmission time reduction method. UMTS employs W-CDMA frames each having a duration of 10 ms and including 15 slots each with a duration of 0.666 ms.

A number of 12 W-CDMA frames forms a W-CDMA frame structure having a duration of 120 ms. For an operation in the compressed mode, information (e.g. speech data, content data, control signals and the like) normally transmitted during a W-CDMA frame is compressed in time. The maximum idle length, i.e. the maximal transmission gap length TGL, is defined according to 3GPP™ specifications to be 7 slots or, as will be referred to in the following, "idle slots" per 10 ms frame. Thus, for a maximal duration of 4.666 ms per W-CDMA frame or 56 ms per W-CDMA frame structure no information is communicated in the compressed mode.

A transmission gap can be located within a W-CDMA frame such that at least on slot of that W-CDMA frame is arranged before and after the transmission gap. Thus, transmission gaps of consecutive W-CDMA frames will be separated by at least one slot. Further, a transmission gap can be located within two consecutive W-CDMA frames such that the respective two W-CDMA frames are bridged. Thus, no W-CDMA slot will be arranged between the parts of transmission gap of the two consecutive W-CDMA frames. In order to meet the maximal transmission gap length TGL of 7 slots per W-CDMA frame, here, in each of the W-CDMA frames bridged by a transmission gap, at least 8 slots must be used for data transmissions. These two methods are called single-frame method and double-frame method and will be described in greater detail below.

For the compressed mode, two options are defined for downlink communications, while only one compression mode is employed for uplink communications. Uplink communications according UMTS employ a slot structure as illustrated in fig. 1. The upper slot structure in fig. 1 designated by the term "data" forms consecutive uplink UMTS slots (two slots shown) which can be separated by transmission gaps TGs (one transmission gap TG shown) when operated for uplink compressed transmission. Normally, data slots are communicated via an associated physical channel such that for a compressed mode operation this physical channel is not used during transmission gaps between single data frames.

Associated to the respective slots for data, control slots are used which have the lower structure illustrated in fig. 1 . For uplink communications, each control slot comprises pilot data Pilot, a transmit format combination indicator TFCI, a final block indicator FBI and transmit power control TPC data. The control slots form consecutive uplink UMTS slots (two control slots shown) which can be separated by transmission gaps TGs (one transmission gap TG shown) for uplink compressed transmission. Comparable to data slots control slots are transmitted via an associated physical channel. As a result, during transmission gaps with respect to control slots this physical channel is not utilized.

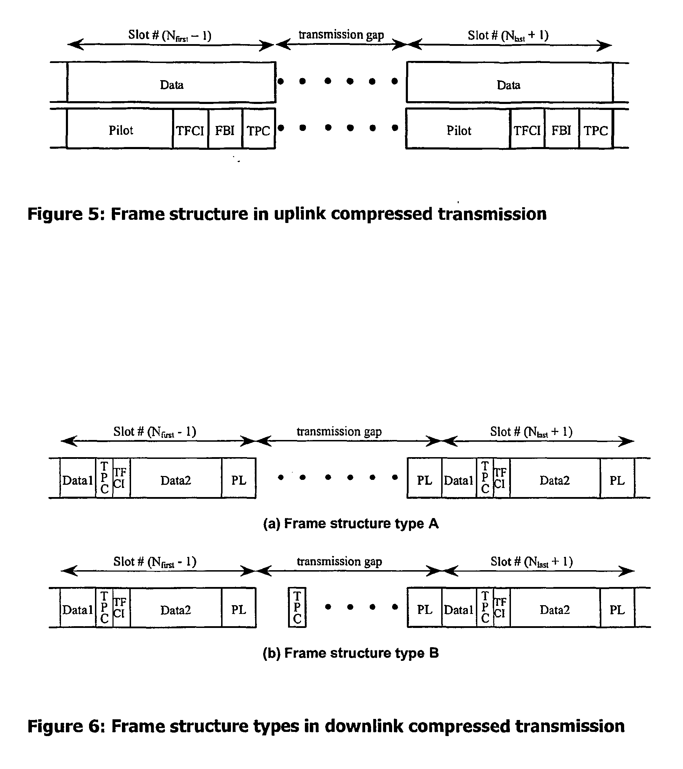

As can be derived from fig. 5, for uplink communications in the compressed mode transmission gaps are only arranged between two consecutive slots and its data and control slots, respectively.

UMTS downlink communications utilize a different frame structure compared to uplink communications, as shown in fig. 2. A frame structure type A (see fig. 6(a)) uses slots with data data 1 (e.g. speech data or content data), transmit power control TPC data, a transmit format combination indicator TFCI, further data data 2 (e.g. speech or content data) and pilot data PL. For downlink compressed transmissions consecutive slots are separated by a transmission gap TG wherein pilot data PL of the last slot in the transmission gap TG is transmitted while transmission is turned off during the rest of the transmission gap TG. As a result, the pilot data PL of the last slot of the transmission gap TG precedes the first data of the subsequently transmitted slot.

The frame structure type A maximizes the transmission gap length TGL, while the frame structure type B (shown in fig. 6(b)) is optimized for power control. The structure of slots for frame structure type B corresponds to the structure for slots of frame structure type A. Here, the transmit power control TPC data of a respective slot in the transmission gap TG and the pilot data PL of the last slot in the transmission gap TG are transmitted. For the remaining part of the transmission gap TG, transmission is turned off.

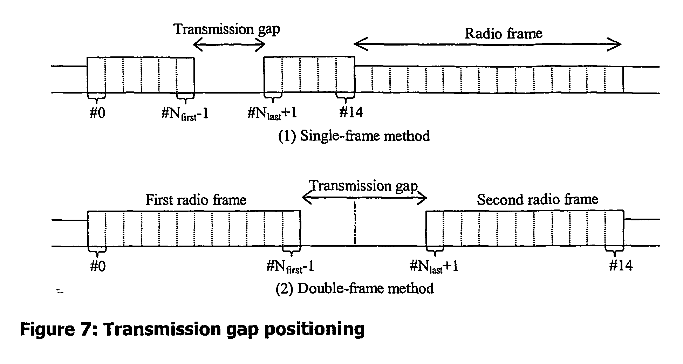

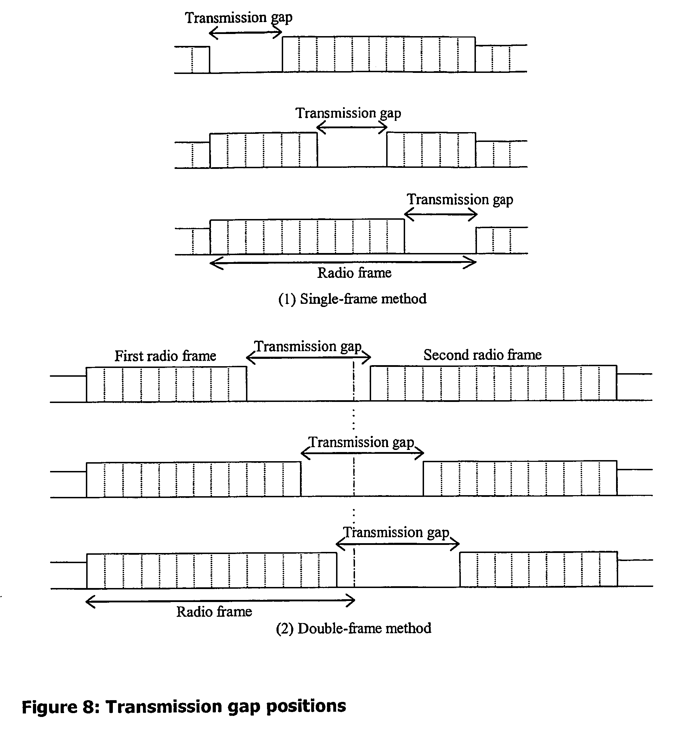

For the compressed mode different positions can be chosen for transmission gaps TGs as shown in fig. 7. According to the so-called single-frame method (see fig. 7(1)), a transmission gap TG is located within a W-CDMA frame, while according to the so-called double-frame method (shown in fig. 7(2)) a transmission gap TG is positioned between two consecutively transmitted W-CDMA frames. Illustrative examples for transmission gap positions for the single-frame method and the double-frame method are shown in fig. 8.

In view of the maximal transmission gap length of 7 idle slots per W-CDMA frame, this results in a maximal transmission gap length of 4.666 ms, here per W-CDMA frame, for the single-frame method. For the double-frame method this results in a maximal transmission gap length of 9.333 ms, here spanning two consecutive W-CDMA frames.

For using GSM/GPRS and UMTS communications environments in co-existence with both communications environments sharing the same frequency range, transmission gaps TGs existing for the compressed mode in UMTS are used for GSM/GPRS transmissions. This is possible since during transmission gaps TGs no transmissions are executed with respect to the UMTS communications environments and due to the fact that GSM/GPRS communications are performed on data packet basis. The transmission gaps provide for transmission resources available for GSM/GPRS communications, while data packet based communications allow for a transmission of single TDMA frames and/or slots without affecting data to be transmitted.

As illustrated in fig. 3, the multiframe structure defined for GSM/GPRS communications (see fig. 3) results in TDMA frame structure having a duration of 240 ms. This corresponds with the duration of two consecutive W-CDMA frames each having a length of 120 ms. Therefore, a mapping of TDMA frame structure to W-CDMA frame structure is chosen in a relation of 1:2, i.e. one TDMA frame structure will be mapped to two consecutive W-CDMA frame structures. Since not all slots of a W-CDMA frame will be idle slots and only W-CDMA slots of transmission gaps are used for transmissions of GSM/GPRS data, the mapping will be further performed on W-CDMA slot basis. That means that a TDMA frame structure (52 TDMA fames) is "synchronized" with respect to two W-CDMA frame structures and that single TDMA frames and/or single slots of a TDMA frame of the TDMA frame structure will be mapped to transmission gap slots of two W-CDMA frame structures.

The use of TDMA frames or slots of TDMA frames for mapping to transmission gaps depends, inter alia, from used transmission gap lengths, time periods between consecutive transmission gaps, data to be transmitted in the GSM/GPRS communications environment, properties of data packets employed in TDMA frame structures and the like. For example, during a transmission gap having a length of one W-CDMA slot (i.e. 0.666 ms), a TDMA slot (i.e. 0.576 ms) can be transmitted. As further examples, for a transmission gap length of 4.666 ms (single-frame method) a TDMA frame (i.e. 8 TDMA slots; 4.615 ms) can be transmitted, while for a transmission gap length of 9.333 ms (double-frame method) two TDMA frames (i.e. 16 TDMA slots; 9.231 ms) can be transmitted.

As an example, a communications environment is assumed which has a transmission gap length of 9.333 ms (double-frame method) and 8 W-CDMA slots used for data transmissions in each W-CDMA frame (i.e. 10.666 ms). Then, during 24 consecutive W-CDMA frames (360 W-CDMA slots = 240 ms) 12 transmission gaps each with a length of 9.333 ms can be realized at each second frame-frame border. Thus, 24 TDMA frames of a TDMA frame structure can be transmitted. This results in a transmission capacity for GSM/GPRS communications via an UMTS communications environment of about 46% compared with conventional GSM/GPRS communications.

As a further example, a communications environment is assumed which has a transmission gap length of 4.666 ms (single-frame method). Then, during 24 consecutive W-CDMA frames (360 W-CDMA slots = 240 ms) 24 transmission gaps each with a length of 4.666 ms can be realized in each frame. Again, 24 TDMA frames of a TDMA frame structure can be transmitted. This results in a transmission capacity for GSM/GPRS communications via an UMTS communications environment of about 46% compared with conventional GSM/GPRS communications.

For the preceding examples, the same transmission capacities for GSM/GPRS communications via an UMTS communications environment can be realized. It can be expected that the latter example will require more synchronization efforts to map each of the 24 TDMA frame to a transmission gap, in contrast to the previous example wherein 12 pairs of TDMA frames are mapped to 12 transmission gaps.

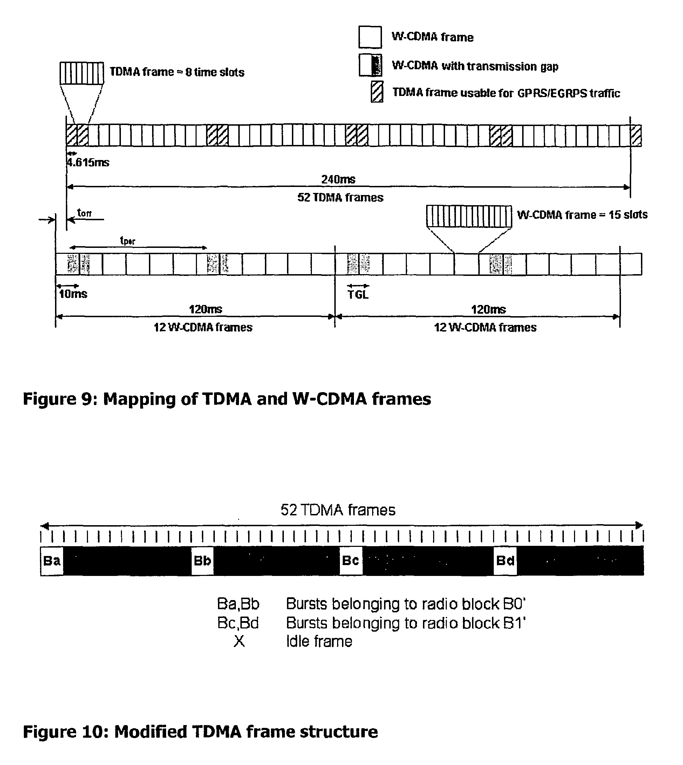

Mapping a TDMA frame structure for GSM/GPRS communications environments to transmission gaps of a W-CDMA frame structure for UMTS communications environments is illustrated in fig. 9.

As regards fig. 9, it is assumed that TDMA frames T used for PTCCH (see fig. 3) are not contemplated for transmission in an UMTS communications environment, while the "synchronization" of the TDMA and W-CDMA frame structures is performed such that TDMA idle frames X (see fig. 3) occur a time where no transmission gap is existing. Further, a transmission gap length of 9.333 ms (double-frame method) and a spacing of 6 W-CDMA frames between transmission gaps (i.e. 90 W-CDMA slots = 60 ms) are assumed. Such frame structures will also be referred to as 6-superiorframe as they rely on TDMA and W-CDMA frames for GSM/GPRS and UMTS communications, respectively, but are different compared to the "original" GSM/GPRS and UMTS frame structures as least with respect to the use of frames for communications.

Then, during 24 consecutive W-CDMA frames (360 W-CDMA slots = 240 ms) having 4 transmission gaps each with a length of 9.333 ms, 8 TDMA frames can be transmitted. This results in a transmission capacity for GSM/GPRS communications via an UMTS communications environment of 1/6 (approximately 17%) compared with conventional GSM/GPRS communications. For this calculation, it is assumed that TDMA frames T used for PTCCH (see fig. 3) are not contemplated for transmission in an UMTS communications environment, while the "synchronization" of the TDMA and W-CDMA frame structures is performed such that TDMA idle frames X (see fig. 3) occur a time where no transmission gap is existing.

The expression "synchronized" as used in this context refers to a transmission of TDMA frame structures in a fixed time relation to W-CDMA frame structures, which also includes a temporal offset between the beginning of a TDMA frame structure and the beginning of the first one of two W-CDMA frame structures associated thereto.

As indicated by arrow $t_{off}$ in fig. 9, a time offset between the GSM/GPRS and UMTS frame structures can be implemented. This will allow for an aligning of a first of the TDMA frames or slots with a first W-CDMA slot of a first of the transmission gaps TGs intended for GSM/GPRS transmissions. Further, as described above, transmission gap lengths TGLs and positions of transmission gaps TGs in the W-CDMA frame structure can be specified within certain limits which is indicated by arrow $t_{per}$ in fig. 9.

Comparable considerations have to be made if a GSM/GPRS frame structure including 26 TDMA frames is used. Here, a mapping in a relation of 1:1 can be chosen, i.e. one GSM/GPRS frame structure will be mapped to one W-CDMA frame structure.

For a GSM/GPRS frame structure including 51 TDMA frames it is possible to insert a delay of one TDMA frame between two consecutive frame structures including 51 TDMA frames to obtain a 1:2 relation with respect to the duration of transmission of TDMA frame structures and W-CDMA frame structures. Further, it is contemplated that a mapping of a frame structure including 51 TDMA frames to a W-CDMA frame structure is performed independently of the overall duration of the TDMA frame structure and the W-CDMA frame structure. Then, the mapping can be performed on W-CDMA slot basis only.

With respect to GSM/GPRS communications environments, this allows to use standard equipment (e.g. radio base stations, user equipment) and transmission standards (e.g. frame structures) specified for these communications environments. As will be set forth below, enhanced results can be obtained by employing modified GSM/GPRS equipment and transmission standards and/or modified UMTS equipment and transmission standards.

Instead of using the TDMA frame structure illustrated in Fig. 3, a new TDMA frame structure or TDMA superiorframe as illustrated in Fig. 10 can be used. This modified TDMA frame structure, i.e. a superiorframe, which also includes 52 TDMA frames is in particular suitable for the scenario illustrated in Fig. 9. The TDMA superiorframe structure shown in Fig. 10 provides 2 radio blocks useable for (E)GPRS communications. One of these radio blocks comprises two structures Ba and Bb (half a radio block) each including two bursts. Ba and Bb are separated by 11 TDMA frames which are not utilized for GSM/GPRS communications. The other of these radio blocks comprises structures Bc and Bd each thereof also including two bursts. As can be derived from Fig. 10, the separation by 11 idle TDMA frames applies to all of the structures Ba, Bb, Bc and Bd. Thus, Fig. 10 illustrates a 13-superiorframe.

Comparable to the scenario described with respect to Fig. 9, the TDMA superiorframe shown in Fig. 10 includes no TDMA frames for PTCCH. In line therewith corresponding packet data channels can only be used as "secondary channels" in order to increase the transmission capacity. That means, that packet data channels being communicated by means of TDMA superiorframe of Fig. 10 during transmission gaps of W-CDMA frames will be used in addition to a "standard" packet data channel which provides PTCCH and are linked thereto. In order to provide for further TDMA frames in the TDMA superiorframe shown in Fig. 10, for example PTCCH, an another or an additional transmission gap pattern can be configured.

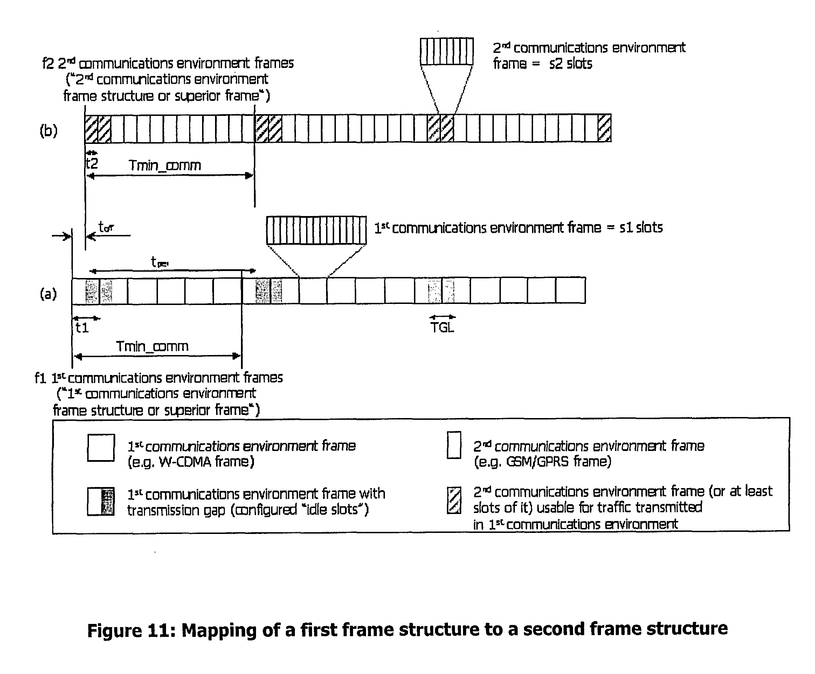

Fig. 11 illustrates, in a general manner, mapping of frame structures of a communications environment to frame structures of another communications environment. As illustrated, a first communications environment is used for transmissions of communication in a second communications environment. The first communication environment uses first frames each thereof consisting of a number of s1 slots. The second communications environment utilizes second frames each thereof comprising a number of s2 slots. As indicated in Fig. 11, a first frame has a duration of t1, while second frames have a duration of t2.

In the first communications environment, a number of f1 first frames forms a specific first frame structure referred to as f1-superiorframe with f1 being set to an actual value. In the second communications environment, a number f2 of second frames forms a specific second frame structure referred to as f2-superframe with f2 being set to an actual value. As set for the above, transmission gaps are defined such that for a period, also referred to as transmission gap length, no transmissions of communications to be performed in the first communications environment occur. Those transmissions gaps which are configured on slot basis can be used for transmissions of communications of the second communications environment.

As indicated by $t_{per}$ transmission gaps or idle periods in the first communications environment can be specified within limits determined, for example by a defined maximum transmission gap length and/or a defined minimum number of first frames or slots thereof to be used for transmissions.

To transmit second frames or at least slots thereof, the first and second communications environments are synchronized such that transmissions gaps in the first communications environment occur substantially at the same time second frames or slots thereof to be transmitted in the first communications environment occur or are available in the second communications environment. Such synchronization is generally recommended on frame structure or superiorframe basis. If, for example, a second frame structure or superiorframe is defined that match better to more than one second frame structure or superiorframe than to a single one thereof, synchronization can also be performed on the basis of multiples of frame structures or superiorframes.

As illustrated in Fig. 11, frame structures or superiorframes for the first and second communications environment are defined as follows. For a given frame definition/specification, in the illustrated example on the basis of the slot numbers s1 and s2 and the frame durations t1 and t2, the numbers f1 and f2 of frames forming a first frame structure of superiorframe and a second frame structure or superiorframe, respectively, are defined such that the minimum values for the superiorframe numbers f1 and f2 fulfill the following equation:

$$f1 \times t1 = f2 \times t2.$$

Then, the duration (f1 x t1) of the first superiorframe and the duration (f2 x t2) of the second superiorframe are the same and define a superiorframe duration Tmin_comm which is indicated in Fig. 11.

If, for example, the first and the second communications environment employ frames having the same duration, i.e. t1 = t2, and the same number of slots per frame, i.e. s1 = s2, so-called 1-superiorframes are obtained, i.e. superiorframes comprising one of the respective frames. As a result, the first superiorframe will comprise one first frame, while the second superiorframe will comprise one second frame.

Comparable to the preceding example, 1-superiorframes can also be obtained in the case frames of the first and second communications environments have the same duration, i.e. t1 = t2, but employ a different number of slots per frame, i.e. s1 ≠ s2.

With respect to a first communications environment being a W-CDMA based environment and the second communications environments being a GSM/GPRS based environment, the following values are used for the above equation:

$$s1 = 15, t1 = 10 \text{ ms and } s2 = 8, t2 = 4{,}615 \text{ ms}$$

As a result, the number f1 for the first superiorframe will be 6, while the number f2 for the second superiorframe will be 13. Thus, a so-called 6-superiorframe will be obtained as first superiorframe, i.e. superiorframe comprising 6 W-CDMA frames, while a so-called 13-superiorframe will be obtained as second superiorframe, i.e. a superiorframe comprising 13 TDMA of frames. Both the first and the second superiorframes have a superiorframe duration Tmin_comm of 60 ms.

As indicated by $t_{off}$, a time of set between the first and second superiorframes can be implemented. This will allow for aligning a first one of second frames in the second superiorframe with a first one of first frames of a transmission gap in the first superiorframe. Comparable thereto, such an alignment can also be based on slot basis.

Further issues to be addressed for an implementation are data traffic related control and scheduling tasks. The GSM/GPRS transmission capacity can be selected within certain limits. For example, W-CDMA frame transmission gaps TGs should be positioned such that simultaneous transmissions in both the GSM/GPRS and UMTS communications environments are avoided. Further, the scheduling of GSM/GPRS communications and actual transmissions should be controlled accordingly.

A more detailed description related to synchronization and data traffic related control and scheduling tasks is presented in the following.

Although GSM/GPRS and UMTS communications environments exhibit some differences with respect to their network structure, from a functional point of view, the network structures of these communications environments are similar. For example, the function of a base transceiver station BTS in a GSM/GPRS communications environment essentially corresponds with a node in an UMTS communications environment. The same applies for a base station controller BSC for GSM/GPRS and a radio network controller RNC for UMTS. In principle, such network components of these communications environments serve as units to and from which communications links are established and maintained from and to user equipment like mobile devices (such as mobile telephones). Thus, the term radio base station RBS will be used to designate such network structures and/or components of the different communications environments.

For a synchronization of the frame structures utilized in GSM/GPRS and UMTS communications environments, radio base stations RBSs for these communications environments are synchronized. Here, basically two different scenarios can be considered:

Scenario A:

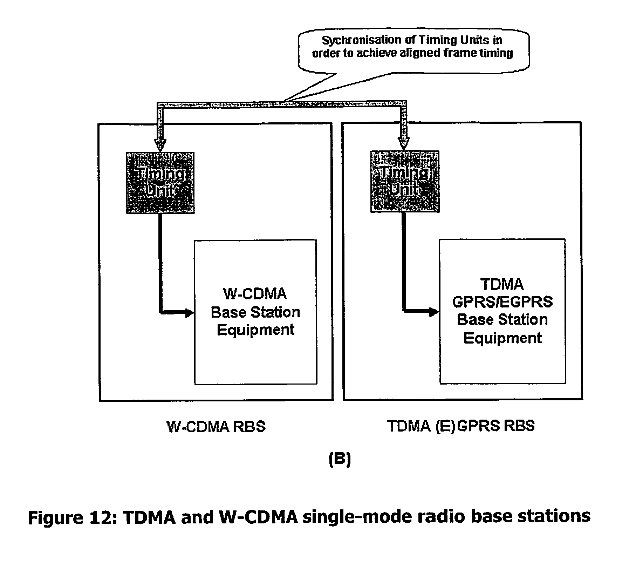

In case of separate radio base stations RBSs respectively used for GSM/GPRS and UMTS, an individual TDMA single-mode radio base station RBS and an individual W-CDMA single-mode radio base station RBS are utilized. These separated radio base stations include TDMA base station equipment and W-CDMA base station equipment, respectively. Further, each single-mode radio base station includes its own timing unit. The TDMA radio base station and the W-CDMA radio base station may thus be synchronized to achieve a common frame timing for example by means of respective timing signals communicated between the radio base stations and, in particular, its timing units. Depending on the preferences defined for the different communications environments, it is possible to operate the timing units of the different radio base stations in a "master/slave" relationship such that always one timing unit is synchronized with respect to the other timing unit. Moreover, it is contemplated to compensate transmission delays for synchronization signals between the different radio base stations. This scenario is illustrated in fig. 12.

Scenario B:

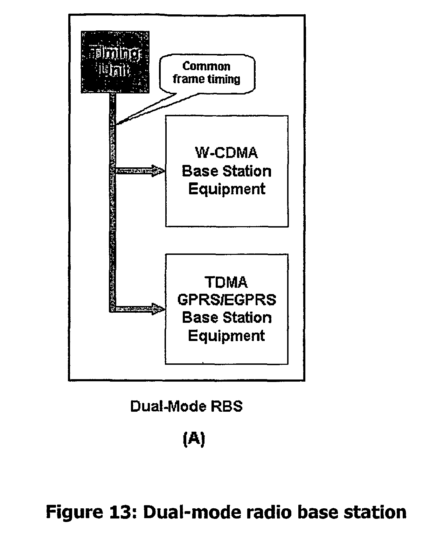

In case of a so-called dual-mode radio base station RBS, a single radio base station is utilized for communications with respect to both GSM/GPRS and UMTS communications environments. As illustrated in fig. 13, such a dual mode radio base station RBS comprises TDMA base station equipment for GSM/GPRS and W-CDMA base station equipment for UMTS. Further, a common timing unit is included which provides for timing and synchronization information to the different base station equipments inside the dual-mode radio base station RBS. As a result, synchronization and, in particular, common frame timing is implicitly achieved.

With respect to data traffic related control and scheduling tasks, GSM/GPRS transmissions should be controlled such that transmission collisions of GSM/GPRS and UMTS transmissions are avoided. This means that for GSM/GPRS transmissions only transmission gaps TGs which are due to the compressed mode of UMTS should be utilized. As set forth above, other types of GSM communications are not executed on data packet basis such that a distribution of other standard GSM communications to different transmission gaps cannot be obtained in general. Therefore, in the following it is assumed that GSM communications being no GSM/GPRS communications are performed in a frequency range outside the frequency range to be shared by GSM/GPRS and UMTS communications.

The resulting demands on control and scheduling can be subdivided in a configuration of transmission gaps TGs in the UMTS communications environment and a scheduling of GSM/GPRS communications in view of a transmission gap configuration.

In line with the above configurations, some control and scheduling functionalities are implemented for the GSM/GPRS and UMTS communications environments. For the GSM/GPRS carriers or TDMA transmissions, respectively, within the shared frequency range, the packet control unit PCU schedules downlink GSM/GPRS transmissions for usable radio blocks only. Further, the packet control unit PCU only assigns usable radio blocks for uplink GSM/GPRS transmissions to for example GSM/GPRS mobile equipment. Moreover, radio base station RBS equipment (see fig. 12 and 13) servicing the GSM/GPRS communications environment does not transmit usable data outside usable radio blocks and packet timing advance control channel PTCCH frames in the shared frequency band.

With respect to the UMTS communications environment, the respective radio base station RBS equipment (see fig. 12 and 13) is configured to utilize the compressed mode for W-CDMA frame transmissions when radio resources are allocated and used within the frequency range shared with GSM/GPRS communications. Also, equipment of the UMTS communications environment is configured to use the compressed mode when such radio resources are allocated and used.

Regarding modifications being expected for GSM/GPRS communications environments in view of UMTS becoming the more important communications environment, the issues considered above can become of minor importance. For example, new communications channel combinations can be used to indicate a mixed communications mode (i.e. shared frequency ranges for both GSM/GPRS and UMPS communications). Further, it is possible to modify the mapping of a packet timing advance control channel PTCCH on the TDMA frame structure, i.e. to change the position of respective frames in the frame structure illustrated in fig. 3 or to use a modified TDMA structure such as shown in fig. 10.

With respect to GSM/GPRS user equipment it is possible to provide information about a mixed communications mode and usable radio blocks of the TDMA frame structure for example by providing additional information at assignment of GSM/GPRS radio resources. Information about a mixed communications mode can be for example broadcasted over a broadcast control channel BCCH for a GSM/GPRS communications environment.


FDD communications via TDD frequencies in an UMTS communications environment

In the following embodiments, the first and second communications standards are defined for a common communications environment. As illustrative example, frequency division duplex (FDD) and time division duplex (TDD) based communications are employed as first and second communications standards, respectively, in an UMTS communications environment as common communications environment. In particular, the following description will be given with respect to HSDPA (High Speed Packet downlink access) in the UMTS communications environment.

In the 3GPP™ specifications, a so-called High Speed Packet Downlink Access (HSDPA) is defined. The goal of HSDPA is to increase the data throughput in a cell or sector, reduce transmission delays and achieve high peek rates.

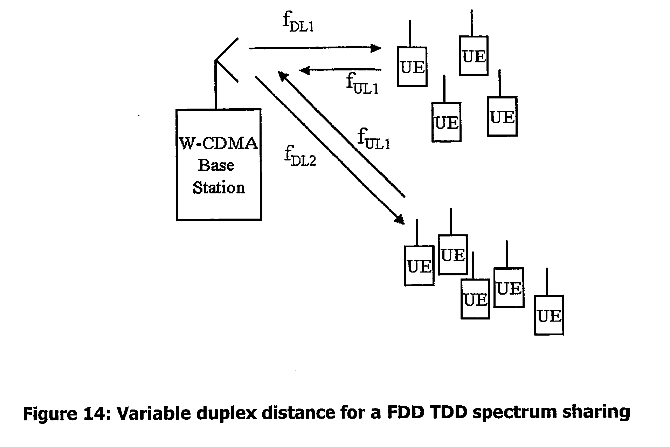

Usually several end user devices such as user equipment UE shown in Fig. 14, share one HSDPA channel. An allocation of this channel to different user equipment UE depends, inter alia, from implemented algorithms, the desired quality of the radio link and the required data through put. An allocation of the HSDPA channel to different user equipment UE is accomplished via time multiplexing.

In particular, communications via a HSDPA channel are performed on the basis of W-CDMA frames each including 15 slots. Moreover, each W-CDMA frame is divided in 5 HS (high speed) sub frames each including 3 slots. Such frame structures are employed both for frequency division duplex (FDD) and time division duplex (TDD) based communications.

As a result of the use of HS subframes, not only a complete W-CDMA frame (15 slots) can be allocated for a radio link to specific user equipment but allows for an allocation of individual HS subframes (3 slots) of a W-CDMA frame to different user equipment.

Since W-CDMA frame structures are comparable for time division duplex (TDD) and frequency division duplex (FDD) communications, it is possible to allocate W-CDMA frames or HS subframes thereof which are originally intended for TDD communications as frames or subframes for FDD communications. Although, the following description is directed to an allocation of TDD (sub) frames for FDD communications, and an allocation of FDD (sub) frames for TDD communications is contemplated in a comparable manner.

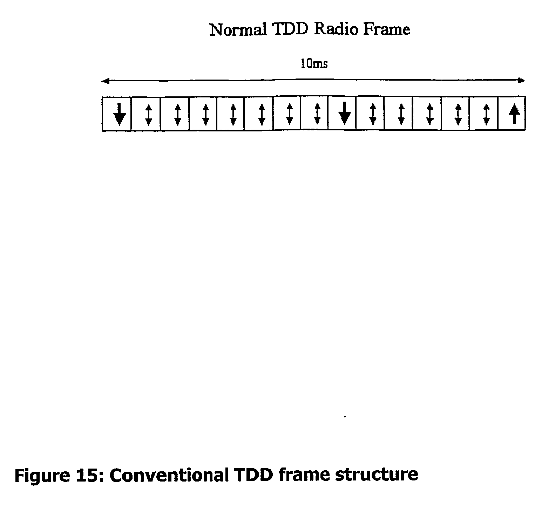

As shown in Fig. 15, a conventional TDD (W-CDMA) frame comprises 15 slots and has an overall length of 10 ms. Further, each TDD (W-CDMA) frame includes at least two slots allocated to TDD downlink and at least one slot allocated to TDD uplink. Thus, the TDD W-CDMA frame could be subdivided into five subframes each including 3 slots. For the example illustrated in Fig. 15, the first slot of the first subframe, the last slot of the third subframe and the last slot of the fifth subframe are used for TDD communications. The orientations of the large arrows in Fig. 15 indicate downlink (arrows directed to the bottom of Fig. 15) and uplink (arrow directed to the top of Fig. 15) communications. Double headed arrows in Fig. 15 indicate slots available for uplink or downlink communications in principle although not utilized for communications in the illustrated example. In line therewith, the second and forth subframes are not utilized for TDD communications and, thus, are available for different communications as will be described below.

For frequency division duplex (FDD) communications, on the basis of full duplex transmissions, two carrier frequency ranges are used, one frequency range for uplink communications and another frequency range for downlink communications. In order to achieve a sufficient separation of uplink and downlink transmissions, according to the 3GPP™ specifications, a duplex distance representing the frequency distance between uplink and downlink frequency ranges is chosen. By means of a variable duplex distance it is possible to change the frequency distance between uplink and downlink frequency ranges for FDD communications on the basis of W-CDMA frames.

Such a variable duplex distance further allows employing further frequency ranges for uplink and/or downlink communications in addition to uplink and downlink frequency ranges originally indented FDD communications (see Fig. 14).

By such a use of a further frequency range for FDD communications, capacity limitations for FDD communications due to uplink and/or downlink constraints can be avoided. For illustrative purposes only, it is assumed that FDD communications are limited by its downlink properties. In order to overcome such a downlink capacity limitation, a further downlink frequency range will provide for the required transmission capacity. As set forth above, frequency ranges originally intended for TDD communications can be used for that purpose during time periods wherein the TDD frequency range is actually not used for TDD communications. With respect to the example illustrated in Fig. 15, the frequency range for the shown TDD W-CDMA frame during the time of the second and forth subframes can be allocated for FDD communications (the use of parts of a TDD frame, i.e. subframes, is, as explained above, possible due to the comparable subdivision of the W-CDMA frames for both TDD and FDD communications).

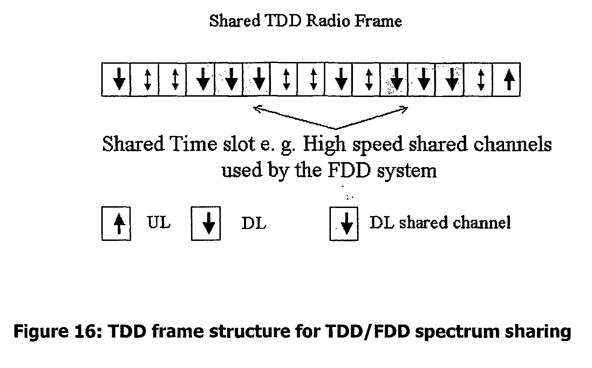

The "shared" TDD W-CDMA frame shown in Fig. 16 illustrates the allocation of the second and forth subframes not utilized for TDD communications for FDD downlink communications in the TDD frequency range.

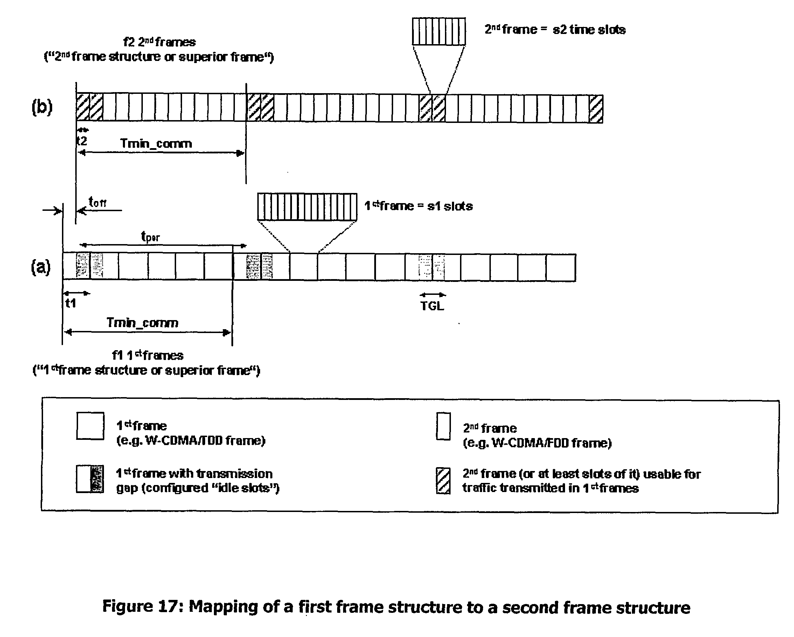

Fig. 17 illustrates, in a general manner, mapping of frame structures of a communications environment to other frame structures of the same communications environment. As illustrated, a communications environment uses first frames each thereof consisting of a number of s1 slots and second frames each thereof comprising a number of s2 slots. As indicated in Fig. 17, a first frame has a duration of t1, while second frames have a duration of t2.

Further, in the communications environment, a number of f1 first frames forms a specific first frame structure referred to as f1-superiorframe with f1 being set to an actual value and a number f2 of second frames forms a specific second frame structure referred to as f2-superiorframe with f2 being set to an actual value.

As set for the above, transmission gaps are defined such that for a period, also referred to as transmission gap length, no transmissions of communications to be performed in the communications environment occur. Those transmissions gaps which are configured on slot basis can be used for transmissions of communications by means of the frames or at least slots thereof of second frame structure.

As indicated by $t_{per}$ transmission gaps or idle periods in the communications environment can be specified within limits determined, for example by a defined maximum transmission gap length and/or a defined minimum number of first frames or slots thereof to be used for transmissions.

To transmit second frames or at least slots thereof, the first and second frame structures are synchronized such that transmissions gaps of the first frame structure occur substantially at the same time second frames or slots thereof to be transmitted in transmission gaps occur or are available. Such synchronization is generally recommended on frame structure or superiorframe basis. If, for example, a second frame structure or superiorframe is defined that match better to more than one second frame structure or superiorframe than to a single one thereof, synchronization can also be performed on the basis of multiples of frame structures or superiorframes.

As illustrated in Fig. 17, frame structures or superiorframes are defined as follows. For a given frame definition/specification, in the illustrated example on the basis of the slot numbers s1 and s2 and the frame durations t1 and t2, the numbers f1 and f2 of frames forming a first frame structure of superiorframe and a second frame structure or superiorframe, respectively, are defined such that the minimum values for the superiorframe numbers f1 and f2 fulfill the following equation:

$$f1 \times t1 = f2 \times t2.$$

Then, the duration (f1 x t1) of the first superiorframe and the duration (f2 x t2) of the second superiorframe are the same and define a superiorframe duration Tmin_comm which is indicated in Fig. 11.

If, for example, the communications environment employ frames having the same duration, i.e. t1 = t2, and the same number of slots per frame, i.e. s1 = s2, so-called 1-superiorframes are obtained, i.e. superiorframes comprising one of the respective frames. As a result, the first superiorframe will comprise one first frame, while the second superiorframe will comprise one second frame.

Comparable to the preceding example, 1-superiorframes can also be obtained in the case frames of the communications environment have the same duration, i.e. t1 = t2, but employ a different number of slots per frame, i.e. $s1 \neq s2$.

With respect to a communications environment being a W-CDMA based environment using FDD and TDD frame structures as described above, the following values are used for the above equation:

$$s1=s2=15 \text{ and } t1=t2=10 \text{ ms.}$$

As a result, the number f1 for the first superiorframe will be 6 and the number f2 for the second superiorframe will also be 6. Thus, a so-called 6-superiorframe will be obtained as first superiorframe and second superiorframe, i.e. superiorframes comprising 6 W-CDMA frames.

As indicated by $t_{off}$, a time of set between the first and second superiorframes can be implemented. This will allow for aligning a first one of second frames in the second superiorframe with a first one of first frames of a transmission gap in the first superiorframe. Comparable thereto, such an alignment can also be based on slot basis.

TDD communications via FDD frequencies in an UMTS communications environment

The observations given in the preceding section correspondingly apply to TDD communications of in an UMTS communications environment to be communicated by means of a "shared" FDD W-CDMA frame.

FDD-GSM/(E)GPRS communications via TDD frequencies in an UMTS communications environment

Today's standards define the use of FDD frame structures for GSM/(E)GPRS communications. Therefore, the observations given with respect to FDD communications via TDD frequencies in an UMTS communications environment correspondingly apply to FDD communications of a GSM/(E)GPRS communications environment to be communicated by means of a "shared" TDD W-CDMA frame of an UMTS communications environment.

TDD-GSM/(E)GPRS communications via FDD frequencies in an UMTS communications environment

New GSM/(E)GPRS standards are in discussion wherein it is contemplated to allow TDD frame based communications. Therefore, the observations given with respect to TDD communications via FDD frequencies in an UMTS communications environment correspondingly apply to TDD communications of a GSM/(E)GPRS communications environment to be communicated by means of a "shared" FDD W-CDMA frame of an UMTS communications environment.

Further embodiments of using communications resources for different communications standards

As regards the above implementation of the invention in existing communications environment, it was assumed that the use of one communications environment for communications of another communications environment is performed for the communications interface between end user equipment and base stations, i.e. an air interface. This can require modified end user equipment, e.g., to actually transmit data only during transmission gaps to be used for communications.

In general, the invention can be implemented for any comparable interface of a communications environment, which can be accessed by units of another communications environment. For example, in case of communications environments, which include air interfaces between radio base stations, the use of one communications environment for communications of another communications environment can performed for the communications interface between base stations. Then, modification can be limited to base stations if necessary at all.

The above descriptions refer to the use of unmodified UMTS standards for which communications according to GSM/(E)GPRS standards are adapted and/or in respect of which GSM/(E)GPRS standards are modified. Further, it is contemplated to use unmodified GSM/(E)GPRS standards for which communications according to UMTS standards are adapted and/or in respect of which UMTS standards are modified, e.g. by the defining longer transmission gaps, shorter periods during which actual data communications have to be performed and the like.

The above described mixed communications are not limited to the examples given with respect to GSM/(E)GPRS communications and W-CDMA communications. Rather, mixed communications as described herein are possible for any communications environments such as mobile telephone systems according to the second generation (e.g. GSM including EDGE, IS95, etc.), the third generation (UMTS: W-CDMA, TDD and CDMA2000) and the planned fourth generation (e.g. OFDM based). Further, an implementation is not limited to combinations of specific frequencies.

Beside the today's used GSM frequency bands (900, 1800, 1900 MHz frequency ranges), the following list shows some more exemplary frequency combinations:

GSM 450 Band:

For GSM 450, the system is required to operate in the following band:

- 450,4 MHz to 457,6 MHz: mobile transmit, base receive;
- 460,4 MHz to 467,6 MHz base transmit, mobile receive.

GSM 480 Band:

For GSM 480, the system is required to operate in the following band:

- 478,8 MHz to 486 MHz: mobile transmit, base receive;
- 488,8 MHz to 496 MHz base transmit, mobile receive.

GSM 750 Band:

For GSM 750, the system is required to operate in the following band:

- 747 MHz to 762 MHz: base transmit, mobile receive;
- 777 MHz to 792 MHz: mobile transmit, base receive.

GSM 850 Band:

For GSM 850, the system is required to operate in the following band:

- 824 MHz to 849 MHz: mobile transmit, base receive;
- 869 MHz to 894 MHz: base transmit, mobile receive.

Moreover, several band pairing options for paired and unpaired frequency arrangements for IMT-2000 systems in bands identified by WARC-92 and WRC-2000 are possible. The following table provides a selection of these options and additionally proposes some further opportunities based on VDT as examples for planned frequency combinations:

|  | (MHz) | Gap (MHz) | UE Tx (MHz) | Duplex Centre separation (MHz) | BS Tx |
|---|---|---|---|---|---|
| Band I | | 1920 - 1980 | 130 | 2110 - 2170 | 190 |
| Band II | | 1850 - 1910 | 20 | 1930 - 1990 | 80 |
| Band III | | 1710 - 1785 | 20 | 1805 - 1880 | 95 |

(continued)

|  | Gap (MHz) | UE Tx | Duplex Centre | BS Tx |
|---|---|---|---|---|
| (*) | 1710 - 1755 | 50 | 1805 - 1850 | 95 |
| (*) | 1755 - 1805 | 305 | 2110 - 2160 | 355 |
| (*) | 1710 - 1770 | 240 | 2110 - 2170 | 400 |
| (*) | 1920 - 1980 | 520 | 2500 - 2690 | Variable |
| (*) | 1850 - 1910 | 590 | 2500 - 2690 | Variable |
| (*) | 1710 - 1785 | 715 | 2500 - 2690 | Variable |
| (*) | 1710 - 1770 | 730 | 2500 - 2690 | Variable |
| (**) | 2500 (2520) - x | y*20 | z - (2670) 2690 | Variable |
|  | x, y and z to are be defined | | | |
| (**) | z - (2670) 2690 | y*20 | 2500 (2520) - x | Variable |
|  | x, y and z to are be defined (Reversed duplex direction) | | | |

Combination of Bands (*) and Bands (**) are considered for future communications environments. Further, ITU-R Resolution 225 from the World Radio Communication Conference 2000 (WRC-2000) states that bands 2500 - 2520 MHz and 2670 - 2690 MHz (as identified for IMT-2000 and allocated to the mobile-satellite service (MSS)) may be used for the satellite component of IMT-2000. However, depending on market developments it may be possible in the longer term for bands 2500 - 2520 MHz and 2670 - 2690 MHz to be used by the terrestrial component of IMT-2000.

<u>Adaptive control for mixed GSM/(E)GPRS and W-CDMA communications within a shared frequency range</u>

The above-described implementation of mixed communications according to different communications standards by sharing communications resources according to one of the communications standards for communications according to different communications standards offer several configuration options. Thus, e.g., different capacity levels for GSM/GPRS communications in an UMTS communications environment can be provided. However, if a possible configuration option is chosen, the resulting capacity characteristics for both communications environments (W-CDMA and GSM/GPRS)) are statically defined until a reconfiguration is carried out.

The above-described mixed communications can be improved by employing an adaptive control method that allows a dynamic reconfiguration depending on the present capacity needs within the shared frequency band. Although, the following description of preferred embodiments refer to the above embodiment detailed in section "GSM/GPRS communications via an UMTS communications environment", the adaptive control can be implemented for any mixed communications according to different standards (see sections "TDD communications via FDD frequencies in an UMTS communications environment", "FDD- GSM/(E)GPRS communications via TDD frequencies in an UMTS communications environment", "TDD-GSM/(E)GPRS communications via FDD frequencies in an UMTS communications environment").

The basic idea is to actually use the mixed W-CDMA and GSM/GPRS communications on demand, i.e. only when communications capacity is currently required for both communications standards (here for W-CDMA and GSM/GPRS communications). In particular, the demand for communications capacity is checked for a geographical area in which both W-CDMA and GSM/GPRS communications are provided. Such an area can be defined as a geographical area covered by at least a GSM/GPRS cell carrier and an UMTS cell carrier which allow mixed communications within a shared frequency range. Following, such an area will be referred to by term "Mixed Traffic Cell" (MTC).

Based on the actual number of allocated and/or requested communications resources for both communications environments, a decision can be derived what kind of communications capacity shall be provided in the considered area. If, however, communications capacity in the considered area is only required by one of the communications environments, the mixed communications operation mode can be disabled and communications capacity would provide for the respective communications environment.

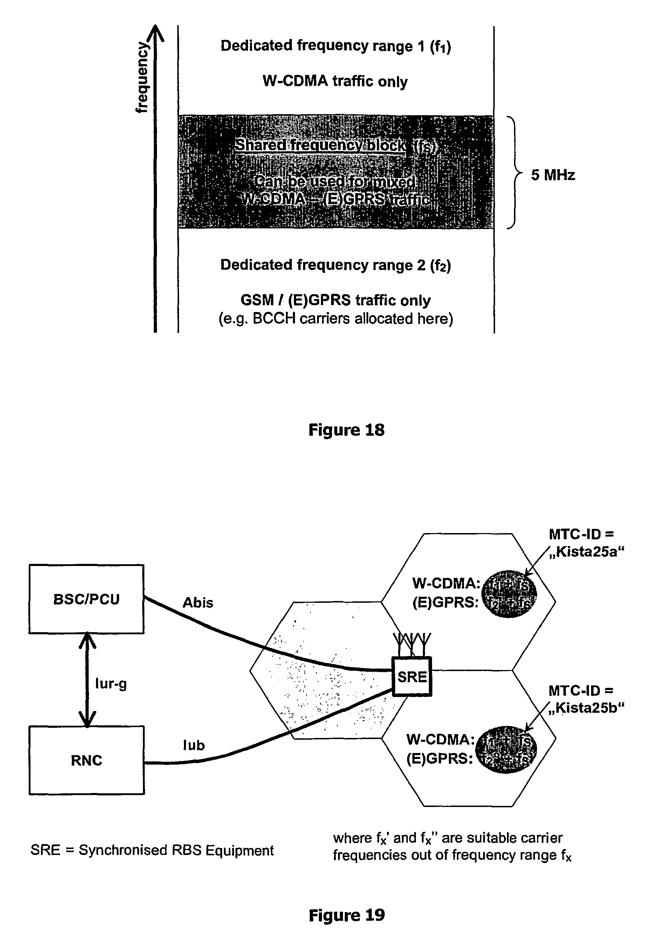

Considering an exemplary scenario shown in Fig.18, each communications environment uses its own dedicated frequency range f1 and f2 and a frequency range $f_s$ shared by both communications environments. Then, the following communications operation modes can be chosen for the shared frequency range $f_s$ by configuring both communications environments accordingly:

- W-CDMA communications only

- GSM/(E)GPRS communications only

- Mixed W-CDMA and GSM/(E)GPRS communications

Fig. 19 illustrates an embodiment with a 3-sector configuration served by synchronized radio base station (RBS) equipment SRE. There, two mixed communications cells are configured, here identified by names "Kista25a" and "Kista25b", respectively.

In both communications cells "Kista25a" and "Kista25b" dedicated frequency ranges f1 and f2 and a frequency range $f_s$ can be used for W-CDMA communications and GSM/(E)GPRS communications or mixed W-CDMA and GSM/ (E)GPRS communications, respectively.

The mixed communications cells are serviced by synchronized radio base station equipment SRE providing for communications in all three frequency ranges. The synchronized radio base station equipment SRE communicates for GSM/(E)GPRS communications with a respective base station controller BSC and packet control unit PCU via respective communications link Abis. With respect to W-CDMA communications, the synchronized radio base station equipment SRE communicates with a respective radio network controller RNC via a suitable communications link lub. For data and information communications between the base station controller/packet control unit BSC/PCU and the radio network controller RNC, the so-called lur-g interface as defined by the third generation partnership project by 3GPP™ can be used.

An adaptive control of the level of mixed communications basically requires following implementations:

- Reporting of communications capacity demands or communications resource status of all cells and cell carriers belonging to one MTC.

- A control entity CE, which decides the level and mode of mixed communications based on the reported figures.

- Configuration of RBS operation mode for the considered MTC according to the current decision made by the CE, including in particular setting-up communications operation mode in a shared frequency range of the MTC.

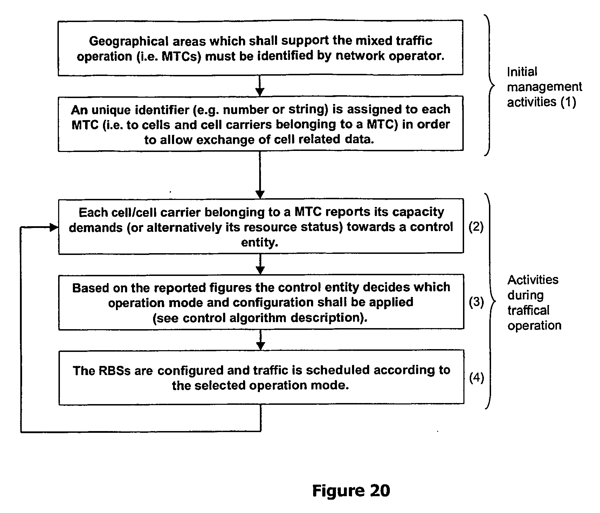

For all of these tasks it must be known which cells and cell carriers belong to the same MTC. Therefore MTC identifications must be assigned, which are also used for identifying all cell/cell carrier related data. Fig. 20 shows a flowchart indicating activities for set-up and operation of a MTC in a communications network comprising the communications environments for which mixed communications are provided.

In an initial stage, geographical areas, i.e. communications cells, wherein mixed communications shall be supported must be identified. For that purpose it is determined which geographical area or cell is serviced by both W-CDMA communications and GSM/(E)GPRS communications.

Then, each identified geographic area is assigned a unique identifier in order to perform control measures with respect to the mixed communications therein. Then, available mixed traffic cells MTCs are specified.

During operation, i.e. current and/or planned communications in a MTC, communications capacity demands for both W-CDMA communications and GSM/(E)GPRS communications are checked. In addition or as an alternative it is possible to check the current communications recourse status for both types of a communications, which is of particular advantage in case of control measures relating to expected/planned communications. Thusly obtained information are communicated to a control entity.

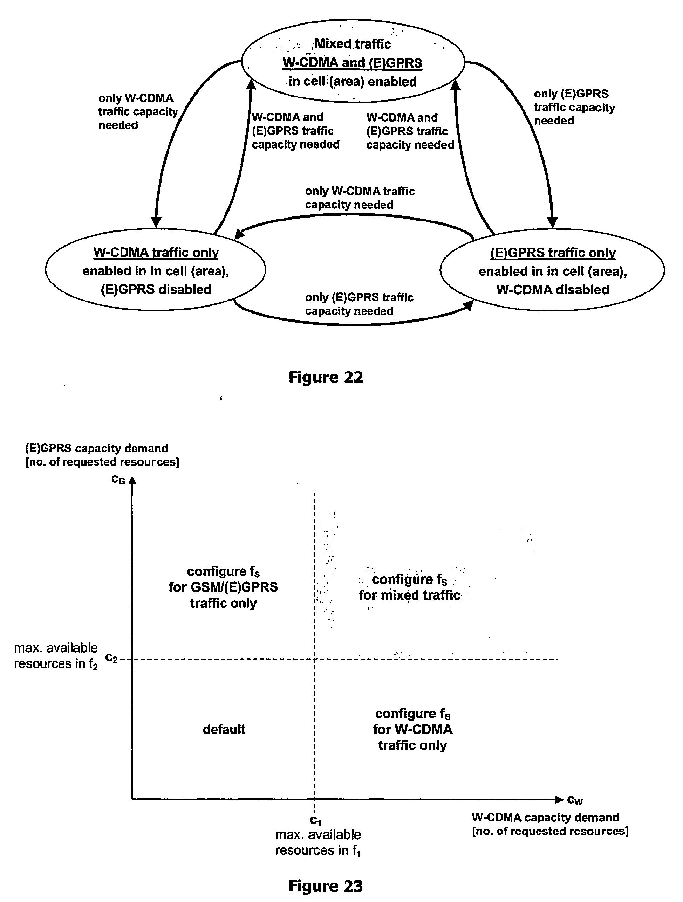

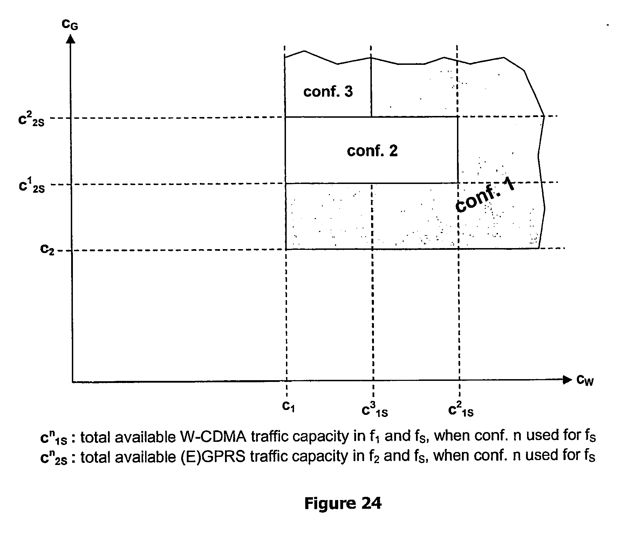

The control entity decides, on the basis of the obtained information, which operation mode (see fig. 23) and/or which configuration (see fig. 24) shall be applied. In response to information provided by the control entity each radio base station equipment such as the synchronized radio base station equipment SRE shown in fig. 19, servicing a MTC is operated and/or configured respectively.

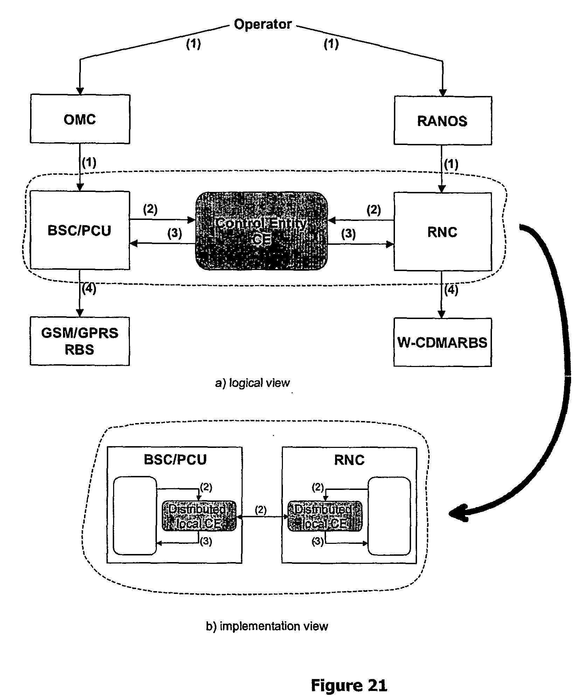

The steps (1), (2), (3) and (4) shown in Fig. 20 can be mapped on an interworking between nodes and functional entities as depicted in Fig. 21 a).

To obtain information necessary to carry out the initial steps of step (1) shown in fig. 20, an operator communicates with an operation and maintenance center OMC as regards GSM/(E)GPRS communications. Comparable thereto, the operator communicates with a radio access network operation support RANOS as regards W-CDMA communications.

For carrying out steps (2) and (3) shown in fig. 20, the base station controller/packet control unit BSC/PCU and the radio network controller RNC communicate with a control entity CE to report communications capacities and/or communications resource status (step (2)) and to obtain communications operation mode and/or configuration information resulting therefrom (step (3)).

Then, the base station controller/packet control unit BSC/PCU and the radio network controller RNC communicate with its respective radio base station RBS for operating the same in line with the determined communications operation mode and/or configuration.

A possible implementation of the control entity CE and the data exchange to and from the control entity CE is shown Fig. 21 b). The control entity CE is realized in a distributed fashion in both BSC/PCU and RNC. The reporting of the capacity/resource figures of the "own" cells can thus be done internally. The capacity/resource figures from the "other cells" need to be transferred between the BSC/PCU and the RNC. For such an information exchange it is possible to use the so-called lur-g interface as defined by the third generation partnership project 3GPP™ (see 3GPP™ TR 43.930 ; V 0.2.1; lur-g interface; stage 2; release 5).

Assuming the same algorithm is implemented in locally distributed parts of the control entity CE, the same input data can be provided to the BSC/PCU and RNC and adaptive control algorithms used therein, respectively. Thus, decisions in relation to a mixed communications operation can be made locally in the BSC/PCU and RNC. Also the configuration and scheduling of communications functions can be made locally in the BSC/PCU and the RNC for each respective RBS equipment based on outputs of its adaptive control algorithms. Advantageously, both the BSC/PCU and RNC use the same adaptive control algorithm.

In order to reduce signaling and re-configurations and also to filter or average communications capacity demands over time, the control entity cycle time should not be too short.

For example, a cycle time value in the order of minutes for the periodic activities seems to be reasonable.

The task of the adaptive control algorithm is to dynamically determine the communications operation mode for each MTC depending on the communications capacity needs in the considered geographical area. As shown in Fig. 18 and 19, a MTC includes dedicated frequency ranges for both communications environments covering the same geographical area.

The levels of requested and/or allocated communications resources in the dedicated frequency ranges can be used as a measure for selecting communications operation modes for the corresponding shared frequency range within a MTC. Assuming a communications capacity limit is reached in the dedicated GSM/(E)GPRS frequency range and in the dedicated W-CDMA frequency spectrum range is left, the shared frequency range in the MTC can be configured for GSM/(E)GPRS traffic only and vice versa. If, however, both dedicated frequency ranges are reaching their communications capacity limits, the shared frequency range in the MTC is configured for mixed communications mode.

Fig. 22 illustrates a traffic operation mode selection algorithm as a state machine. Parameters controlling the state transitions in accordance with Fig. 23 are:

$c_W$ := capacity demand for W-CDMA communications

$c_G$ := capacity demand for GSM/(E)GPRS communications

$c_1$ := maximal available communications capacity for W-CDMA communications

$c_2$ := maximal available communications capacity for GSM/(E)GPRS communications

$t_a$ - $t_d$ := are suitable threshold values in order to limit reconfigurations

Assuming a default configuration for W-CDMA communications is defined to be

$$c_G < c_2 + t_c$$

W-CDMA and GSM/(E)GPRS communications capacity is needed if $c_W > c_1 + t_b$ and $c_G > c_2 + t_d$ is true and only W-CDMA communications capacity is needed if $c_W > c_1 + t_b$ and $c_G < c_2 + t_c$ is true. Further, if $c_W < c_1 + t_a$ and $c_G > c_2 + t_d$ is true, then only GSM/(E)GPRS communications capacity is needed.

The previous examples refer to communications capacities in form of, e.g., size of a shared range or frequencies thereof, hardware, software and the like. An improved adaptive control of mixed communications can be obtained by configuration of mixed communications as such, i.e. possible amount of transmission of GSM/(E)GPRS communications in an UMTS communications environment. As described above, a plurality of configuration options are possible for the W-CDMA transmission gap allowing different amount of GSM/(E)GPRS communications to be transmitted during W-CDMA transmission gaps.

For illustration only, the following configuration options referred to in Fig. 24 are considered:

Configuration 1 (Conf. 1):= 2 frame structures GSM/(E)GPRS traffic every 120ms
Configuration 2 (Conf. 2):= 4 frame structures GSM/(E)GPRS traffic every 120ms
Configuration 3 (Conf. 3):= 6 frame structures GSM/(E)GPRS traffic every 120ms

Each of these configuration options offers a specific capacity trade-off between W-CDMA and GSM/(E)GPRS communications. This means that the state "mixed W-CDMA and GSM/(E)GPRS communications" in Fig. 22 can be further refined by choosing a suitable configuration depending on the capacity demands of both communications environments.

Fig. 24 illustrates how parameters could be chosen for a refined communications mode selection algorithm. The strategy used in this example is to prioritize W-CDMA communications capacity demands, i.e. a re-configuration towards more GSM/(E)GPRS communications capacity (i.e. a longer W-CDMA transmission gap) is only done, if W-CDMA communications capacity demands can be satisfied with the new configuration as well. Thus Configuration 1 (which offers most W-CDMA communications capacity in a mixed communications mode) is dominating.

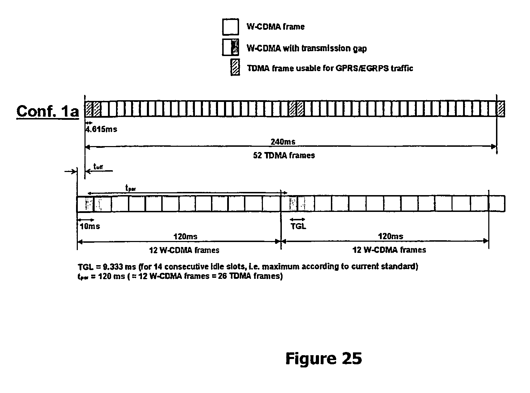

For the above configurations, fig. 25 to 28 illustrate exemplary mappings of the TDMA frame structure shown in fig. 3 and the W-CDMA frame structure shown in fig. 5 and 6.

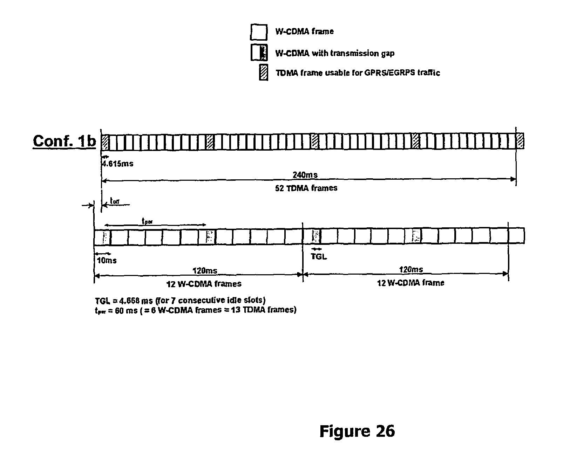

For configuration 1 two possible mapping schemes are shown in fig. 25 and 26. Fig. 25 illustrates mapping of two TDMA frame structures to a transmission gap every 120 ms and Fig. 26 illustrates mapping of a single TDMA frame structure to a transmission gap every 60 ms. Thus, both mapping schemes provide for a GSM/(E)GPRS traffic of two frame structures every 120 ms. These mapping schemes can be obtained, e.g., by utilizing less and/or shorter transmission gaps.

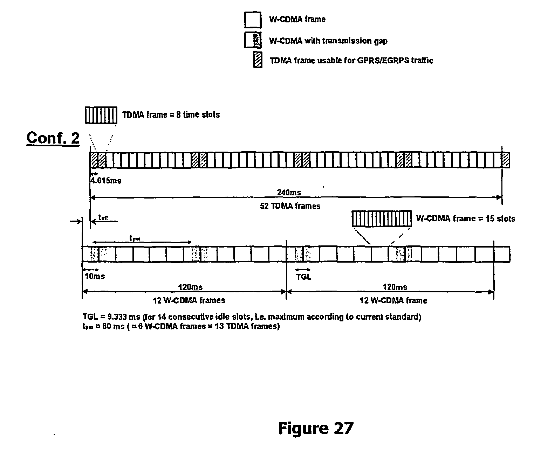

Possible mapping of the TDMA and W-CDMA frame structures for configuration 2 is shown in fig. 27 wherein two TDMA frame structures are mapped to a transmission gap every 60 ms. Here, the mapping scheme provides for a GSM/(E)GPRS traffic of 4 frame structures every 120 ms. This mapping scheme can be compared with the mapping illustrated in fig. 9 to which it is referred therefore.

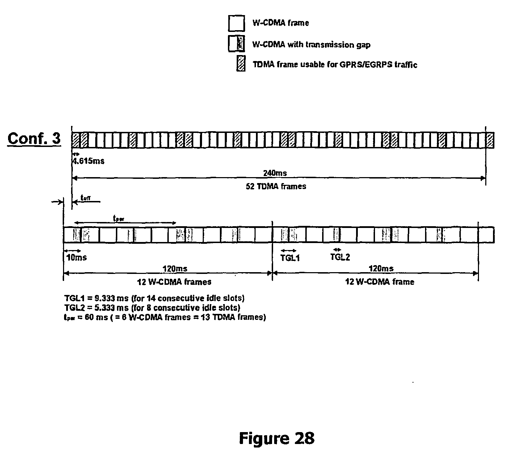

Frame structure mapping for configuration 3 as illustrated in fig. 28 can be considered as combination of the mapping schemes shown in fig. 26 and 27. Here, two TDMA frame structures are mapped to a transmission gap every 60 ms and a single TDMA frame structure is mapped to a transmission gap every 60 ms in alternate manner. Thus, that mapping scheme can be obtained, e.g., by utilizing more and/or longer transmission gaps and provides for a GSM/(E)GPRS traffic of 6 frame structures every 120 ms.

Resulting from such an adaptive control method, an optimized communications capacity sharing between communications environments such as GSM/(E)GPRS and W-CDMA based communications environments is possible. Further, communications capacity sharing exhibiting a dynamic behavior can be obtained. In particular, communications capacity in a shared frequency range is determined based on currently present communications capacity needs in both communications environments. Further, any static configuration of compressed mode is avoided in the shared frequency range. Moreover, signaling between communications environment participating a mixed communications mode, e.g. between radio base stations, can be implemented on the lur-g interface for which it might be helpful to add new messages in the specification.

**Claims**

1. A method for operating a first communications environment for which first communications resources <Transmission Gap, TG> are provided for communications according to a first communications standard type, comprising the steps of:

   - using the first communication resources for communications according to the first communications standard type,
   - using the first communications resources for communications according to a second communications standard type, and
   - controlling the use of the first communications resources as being used for communications according to the first communications standard type in dependence of communications to be performed according to the second communications standard type,
   **characterized by**
   - communicating according to the first communications standard type by using a first frame structure including at least one transmission gap <TG>,
   - controlling the use of the first communication resources by controlling at least one of a number and duration of the at least one transmission gap <TG>, and
   - using the at least one transmission gap <TG> for communications according to the second communications standard type.

2. The method according to claim 1, comprising the step of:

- controlling the use of the first communications resources <TG> for communications according to the first communications standard type in dependence of communications to be performed according to the first communications standard type.

3. The method according to claim 1 or 2, comprising the steps of:

- using second communications resources provided for communications according to the second communications standard type for communications according to the first communications standard type and
- controlling the use of the second communications resources for communications according to the second communications standard type in dependence of communications to be performed according to the first communications standard type.

4. The method of claim 3, comprising the steps of:

- communicating according to the second communications standard type by using a second frame structure, and
- controlling the use of the second communications resource by controlling at least one of a number and a duration of at least a part of the second frame structure being used for communications according to the second communications standard type.

5. The method according to claim 3 or 4, comprising the step of:

- controlling the use of the second communications resources for communications according to the second communications standard type in dependence of communications to be performed according to the second communications standard type.

6. The method

- according to one of the preceding claims, wherein the first communications resources include a first frequency range, and/or
- according to one of the claims 3 to 5 the second communications resources include a second frequency range.

7. The method according to claim 6, wherein the first frequency range and the second frequency range overlap at least partially.

8. The method

- according to one of the preceding claims, comprising the step of:

-- controlling the use of the first communications resources for a geographical area for which both communications according to the first communications standard type and communications according to the second communications standard type are provided, and/or

- according to one of the claims 3 to 7, comprising the step of:

-- controlling the use of the second communications resources for a geographical area for which both communications according to the first communications standard type and communications according to the second communications standard type are provided.

9. The method

- according to one of the preceding claims, comprising the step of:

-- controlling the use of the first communications resources in dependence of at least one of a current communications traffic according to the second communications standard type, expected communications traffic according to the second communications standard type and available communications resources for communications according to the second communications standard type, and/or

- according to one of the claims 2 to 8, comprising the step of:

-- controlling the use of the first communications resources in dependence of at least one of a current communications traffic according to the first communications standard type, expected communications traffic according to the first communications standard type and available communications resources for communications according to the first communications standard type.

**10.** The method

- according to one of the claims 3 to 9, comprising the step of:

-- controlling the use of the second communications resources in dependence of at least one of a current communications traffic according to the first communications standard type, expected communications traffic according to the first communications standard type and available communications resources for communications according to the first communications standard type, and/or

- according to one of the claims 5 to 9, comprising the step of:

-- controlling the use of the second communications resources in dependence of at least one of a current communications traffic according to the second communications standard type, expected communications traffic according to the second communications standard type and available communications resources for communications according to the second communications standard type.

**11.** The method

- according to one of the preceding claims, comprising the step of:

-- providing the first communications resources as resources comprised by the first communications environment, which provides for communications according to the first communications standard type, and/or

- according to one of the claims 3 to 10, comprising the step of:

-- providing the first communications resources and second communications resources as resources comprised by the first communications environment, which provides for both communications according to the first communications standard type and communications according to the second communications standard type.

**12.** The method according to one of the claims 3 to 11, comprising the steps of:

- providing the first communications resources as resources comprised by the first communications environment, which provides for communications according to the first communications standard type, and
- providing the second communications resources as resources comprised by a second communications environment, which provides for communications according to the second communications standard type.

**13.** The method according to one of the preceding claims, comprising the step of:

- communicating information indicating at least one of a current communications traffic according to the second communications standard type, expected communications traffic according to the second communications standard type and available communications resources for communications according to the second communications standard type to the first communications resources so as to control the use of the first communications resources.

**14.** The method according to one of the claims 3 to 13, comprising the step of:

- communicating information indicating at least one of a current communications traffic according to the first communications standard type, expected communications traffic according to the first communications standard type and available communications resources for communications according to the first communications standard type to the second communications resources so as to control the use of the second communications resources.

**15.** The method according to one of the preceding claims, comprising the step of:

- using the first communications resources for

-- only communications according to the first communications standard type, or
-- only communications according to the second communications standard type, or
-- communications according to the first communications standard type and communications according to the second communications standard type.

**16.** The method according to one of the claims 3 to 15, comprising the step of:

- using the second communications resources for

-- only communications according to the first communications standard type, or
-- only communications according to the second communications standard type, or
-- communications according to the first communications standard type and communications according to the second communications standard type.

**17.** The method according to one of the preceding claims, comprising the step of:

- controlling the use of the first communications resources such that communications according to the first communications standard type are prioritized in relation to communications according to the second communications standard type.

**18.** The method according to one of the claims 3 to 17, comprising the step of:

- controlling the use of the second communications resources such that communications according to the second communications standard type are prioritized in relation to communications according to the first communications standard type.

**19.** A communications environment, being adapted

- to utilize first communications resources <TG> for communications according to a first communications standard type for communications according to a second communications standard type, and
- to control the use of the first communications resources <TG> for communications according to the first communications standard type in dependence of communications to be performed according to the second communications standard type,

**characterized in that**

- the first communications resources comprise a first frame structure including at least one transmission gap <TG>,
- the communications environment is adapted to control the use of the first communications resources by controlling at least one of a number and duration of the at least one transmission gap <TG>, and
- the communications environment is adapted to control the use of the at least one transmission gap <TG> for communications according to the second communications standard type.

**20.** The communications environment according to claim 19, being adapted

- to control the use of the first communications resources <TG> for communications according to the first communications standard type in dependence of communications to be performed according to the first communications standard type.

**21.** The communications environment according to claim 19 or 20, being adapted

- to utilize second communications resources for communications according to the second communications standard type for communications according to the first communications standard type, and
- to control the use of the second communications resources for communications according to the second communications standard type in dependence of communications to be performed according to the first communications standard type.

**22.** The communications environment according to claim 21, wherein

- the second communications resources comprise a second frame structure for communication according to the second communications standard type, and
- the communications environment is adapted to control the use of the second communications resources by controlling at least one of a number and a duration of at least a part of the second frame structure being used for communications according to the second communications standard type.

**23.** The communications environment according to claim 21 or 22, being adapted

- to control the use of the second communications resources for communications according to the second communications standard type in dependence of communications to be performed according to the second communications standard type.

**24.** The communications environment,

- according to one of the claims 19 to 22, wherein the first communications resources include a first frequency range, and/or
- according to one of the claims 21 to 23, wherein the second communications resources include a second frequency range.

**25.** The communications environment according to claim 24, wherein

- the first frequency range and the second frequency range overlap at least partially.

**26.** The communications environment

- according to one of the claims 19 to 25, being adapted to control the use of the first communications resources for a geographical area for which both communications according to the first communications standard type and communications according to the second communications standard type are provided, and/or
- according to one of the claims 21 to 25, being adapted to control the use of the second communications resources for a geographical area for which both communications according to the first communications standard type and communications according to the second communications standard type are provided.

**27.** The communications environment

- according to one of the claims 19 to 24, being adapted to control the use of the first communications resources in dependence of at least one of a current communications traffic according to the second communications standard type, expected communications traffic according to the second communications standard type and available communications resources for communications according to the second communications standard type, and/or
- according to one of the claims 21 to 26, being adapted to control the use of the first communications resources in dependence of at least one of a current communications traffic according to the first communications standard type, expected communications traffic according to the first communications standard type and available communications resources for communications according to the first communications standard type.

**28.** The communications environment

- according to one of the claims 21 to 27, being adapted to control the use of the second communications resources in dependence of at least one of a current communications traffic according to the first communications standard type, expected communications traffic according to the first communications standard type and available communications resources for communications according to the first communications standard type, and/or
- according to one of the claims 23 to 27, being adapted to control the use of the second communications resources in dependence of at least one of a current communications traffic according to the second communications standard type, expected communications traffic according to the second communications standard type and available communications resources for communications according to the second communications standard type.

29. The communications environment

- according to one of the claims 19 to 28, wherein the first communications resources are comprised by the first communications environment, which provides for communications according to the first communications standard type, and/or
- according to one of the claims 21 to 28, wherein the first communications resources and second communications resources are comprised by the first communications environment, which provides for both communications according to the first communications standard type and communications according to the second communications standard type.

30. The communications environment according to one of the claims 21 to 29, wherein

- the first communications resources are comprised by the first communications environment, which provides for communications according to the first communications standard type, and
- the second communications resources are comprised by a second communications environment, which provides for communications according to the second communications standard type.

31. The communications environment according to one of the claims 19 to 30, being adapted

- to communicate information indicating at least one of a current communications traffic according to the second communications standard type, expected communications traffic according to the second communications standard type and available communications resources for communications according to the second communications standard type to the first communications resources so as to control the use of the first communications resources.

32. The communications environment according to one of the claims 21 to 31, being adapted

- to communicate information indicating at least one of a current communications traffic according to the first communications standard type, expected communications traffic according to the first communications standard type and available communications resources for communications according to the first communications standard type to the second communications resources so as to control the use of the second communications resources.

33. The communications environment according to one of the claims 19 to 32, wherein the first communications resources are used for

- only communications according to the first communications standard type, or
- only communications according to the second communications standard type, or
- communications according to the first communications standard type and communications according to the second communications standard type.

34. The communications environment according to one of the claims 21 to 33, wherein the second communications resources are used for

- only communications according to the first communications standard type, or
- only communications according to the second communications standard type, or
- communications according to the first communications standard type and communications according to the second communications standard type.

35. The communications environment according to one of the claims 19 to 34, wherein

- the use of the first communications resources are controlled such that communications according to the first communications standard type are prioritized in relation to communications according to the second communications standard type.

**36.** The communications environment according to one of the claims 21 to 35, wherein

- the use of the second communications resources are controlled such that communications according to the second communications standard type are prioritized in relation to communications according to the first communications standard type.

**37.** A radio base station for a communications environment being adapted to be operated according to the steps of one of the claims 1 to 18.

**38.** A computer program product, comprising program code portions for carrying out the steps according to one of the claims 1 to 18.

**39.** The computer program product according to claim 38, being stored on a computer readable storage medium or in a computer readable storage device.

**Patentansprüche**

**1.** Verfahren zum Betreiben einer ersten Kommunikationsumgebung, für die erste Kommunikationsressourcen <TG> ('TG = Transmission Gap" / Übertragungslücke) für Kommunikationen gemäß einem ersten Kommunikationsstandardtyp vorgesehen sind, das die Schritte umfasst:

- Verwenden der ersten Kommunikationsressourcen für Kommunikationen gemäß dem ersten Kommunikationsstandardtyp,
- Verwenden der ersten Kommunikationsressourcen für Kommunikationen gemäß einem zweiten Kommunikationsstandardtyp, und
- Steuern der Verwendung der ersten Kommunikationsressourcen bei einer Verwendung für Kommunikationen gemäß dem ersten Kommunikationsstandardtyp in Abhängigkeit von Kommunikationen, die gemäß dem zweiten Kommunikationsstandardtyp auszuführen sind,
  **gekennzeichnet durch**
- Kommunizieren gemäß dem ersten Kommunikationsstandardtyp **durch** Verwenden einer ersten Rahmenstruktur, die zumindest eine Übertragungslücke <TG> umfasst,
- Steuern der Verwendung der ersten Kommunikationsressourcen **durch** Steuern einer Anzahl und/oder einer Dauer der zumindest einen Übertragungslücke <TG>, und
- Verwenden der zumindest einen Übertragungslücke <TG> für Kommunikationen gemäß dem zweiten Kommunikationsstandardtyp.

**2.** Verfahren nach Anspruch 1, das den Schritt umfasst:

- Steuern der Verwendung der ersten Kommunikationsressourcen <TG> für Kommunikationen gemäß dem ersten Kommunikationsstandardtyp in Abhängigkeit von Kommunikationen, die gemäß dem ersten Kommunikationsstandardtyp auszuführen sind.

**3.** Verfahren nach Anspruch 1 oder 2, das die Schritte umfasst:

- Verwenden der zweiten Kommunikationsressourcen, die für Kommunikationen gemäß dem zweiten Kommunikationsstandardtyp vorgesehen sind, für Kommunikationen gemäß dem ersten Kommunikationsstandardtyp und
- Steuern der Verwendung der zweiten Kommunikationsressourcen für Kommunikationen gemäß dem zweiten Kommunikationsstandardtyp in Abhängigkeit von Kommunikationen, die gemäß dem ersten Kommunikationsstandardtyp auszuführen sind.

**4.** Verfahren nach Anspruch 3, das die Schritte umfasst:

- Kommunizieren gemäß dem zweiten Kommunikationsstandardtyp durch Verwenden einer zweiten Rahmenstruktur und
- Steuern der Verwendung der zweiten Kommunikationsressource durch Steuern einer Anzahl und/oder einer Dauer zumindest eines Teils der zweiten Rahmenstruktur, die für Kommunikationen gemäß dem zweiten Kommunikationsstandardtyp verwendet wird.

5. Verfahren nach Anspruch 3 oder 4, das den Schritt umfasst:

  - Steuern der Verwendung der zweiten Kommunikationsressourcen für Kommunikationen gemäß dem zweiten Kommunikationsstandardtyp in Abhängigkeit von Kommunikationen, die gemäß dem zweiten Kommunikationsstandardtyp auszuführen sind.

6. Verfahren

  - nach einem der vorhergehenden Ansprüche, wobei die ersten Kommunikationsressourcen einen ersten Frequenzbereich umfassen, und/oder
  - nach einem der Ansprüche 3 bis 5, wobei die zweiten Kommunikationsressourcen einen zweiten Frequenzbereich umfassen.

7. Verfahren nach Anspruch 6, wobei sich der erste Frequenzbereich und der zweite Frequenzbereich zumindest teilweise überlappen.

8. Verfahren

  - nach einem der vorhergehenden Ansprüche, das den Schritt umfasst:

    -- Steuern der Verwendung der ersten Kommunikationsressourcen für einen geografischen Bereich, für den sowohl Kommunikationen gemäß dem ersten Kommunikationsstandardtyp als auch Kommunikationen gemäß dem zweiten Kommunikationsstandardtyp vorgesehen sind, und/oder

  - nach einem der Ansprüche 3 bis 7, das den Schritt umfasst:

    -- Steuern der Verwendung der zweiten Kommunikationsressourcen für einen geografischen Bereich, für den sowohl Kommunikationen gemäß dem ersten Kommunikationsstandardtyp als auch Kommunikationen gemäß dem zweiten Kommunikationsstandardtyp vorgesehen sind.

9. Verfahren

  - nach einem der vorhergehenden Ansprüche, das den Schritt umfasst:

    -- Steuern der Verwendung der ersten Kommunikationsressourcen in Abhängigkeit von einem momentanen Kommunikationsverkehr gemäß dem zweiten Kommunikationsstandardtyp und/oder einem erwarteten Kommunikationsverkehr gemäß dem zweiten Kommunikationsstandardtyp und/oder verfügbaren Kommunikationsressourcen für Kommunikationen gemäß dem zweiten Kommunikationsstandardtyp; und/oder

  - nach einem der Ansprüche 2 bis 8, das den Schritt umfasst:

    -- Steuern der Verwendung der ersten Kommunikationsressourcen in Abhängigkeit von einem momentanen Kommunikationsverkehr gemäß dem ersten Kommunikationsstandardtyp und/oder einem erwarteten Kommunikationsverkehr gemäß dem ersten Kommunikationsstandardtyp und/oder verfügbaren Kommunikationsressourcen für Kommunikationen gemäß dem ersten Kommunikationsstandardtyp.

10. Verfahren

  - nach einem der Ansprüche 3 bis 9, das den Schritt umfasst:

    -- Steuern der Verwendung der zweiten Kommunikationsressourcen in Abhängigkeit von einem momentanen Kommunikationsverkehr gemäß dem ersten Kommunikationsstandardtyp und/oder einem erwarteten Kommunikationsverkehr gemäß dem ersten Kommunikationsstandardtyp und/oder verfügbaren Kommunikationsressourcen für Kommunikationen gemäß dem ersten Kommunikationsstandardtyp; und/oder

  - nach einem der Ansprüche 5 bis 9, das den Schritt umfasst:

-- Steuern der Verwendung der zweiten Kommunikationsressourcen in Abhängigkeit von einem momentanen Kommunikationsverkehr gemäß dem zweiten Kommunikationsstandardtyp und/oder einem erwarteten Kommunikationsverkehr gemäß dem zweiten Kommunikationsstandardtyp und/oder verfügbaren Kommunikationsressourcen für Kommunikationen gemäß dem zweiten Kommunikationsstandardtyp.

**11.** Verfahren

- nach einem der vorhergehenden Ansprüche, das den Schritt umfasst:

-- Vorsehen der ersten Kommunikationsressourcen als Ressourcen, die von der ersten Kommunikationsumgebung umfasst sind, was zu Kommunikationen gemäß dem ersten Kommunikationsstandardtyp führt; und/oder

- nach einem der Ansprüche 3 bis 10, das den Schritt umfasst:

-- Vorsehen der ersten Kommunikationsressourcen und der zweiten Kommunikationsressourcen als Ressourcen, die von der ersten Kommunikationsumgebung umfasst sind, was zu Kommunikationen sowohl gemäß dem ersten Kommunikationsstandardtyp als auch zu Kommunikationen gemäß dem zweiten Kommunikationsstandardtyp führt.

**12.** Verfahren nach einem der Ansprüche 3 bis 11, das die Schritte umfasst:

- Vorsehen der ersten Kommunikationsressourcen als Ressourcen, die von der ersten Kommunikationsumgebung umfasst sind, was zu Kommunikationen gemäß dem ersten Kommunikationsstandardtyp führt, und
- Vorsehen der zweiten Kommunikationsressourcen als Ressourcen, die von einer zweiten Kommunikationsumgebung umfasst sind, was zu Kommunikationen gemäß dem zweiten Kommunikationsstandardtyp führt.

**13.** Verfahren nach einem der vorhergehenden Ansprüche, das den Schritt umfasst:

- Kommunizieren von Informationen, die einen momentanen Kommunikationsverkehr gemäß dem zweiten Kommunikationsstandardtyp und/oder einen erwarteten Kommunikationsverkehr gemäß dem zweiten Kommunikationsstandardtyp und/oder verfügbare Kommunikationsressourcen für Kommunikationen gemäß dem zweiten Kommunikationsstandardtyp anzeigen, an die ersten Kommunikationsressourcen, um die Verwendung der ersten Kommunikationsressourcen zu steuern.

**14.** Verfahren nach einem der Ansprüche 3 bis 13, das den Schritt umfasst:

- Kommunizieren von Informationen, die einen momentanen Kommunikationsverkehr gemäß dem ersten Kommunikationsstandardtyp und/oder einen erwarteten Kommunikationsverkehr gemäß dem ersten Kommunikationsstandardtyp und/oder verfügbare Kommunikationsressourcen für Kommunikationen gemäß dem ersten Kommunikationsstandardtyp anzeigen, an die zweiten Kommunikationsressourcen, um die Verwendung der zweiten Kommunikationsressourcen zu steuern.

**15.** Verfahren nach einem der vorhergehenden Ansprüche, das den Schritt umfasst:

- Verwenden der ersten Kommunikationsressourcen

-- nur für Kommunikationen gemäß dem ersten Kommunikationsstandardtyp oder
-- nur für Kommunikationen gemäß dem zweiten Kommunikationsstandardtyp oder
-- für Kommunikationen gemäß dem ersten Kommunikationsstandardtyp und für Kommunikationen gemäß dem zweiten Kommunikationsstandardtyp.

**16.** Verfahren nach einem der Ansprüche 3 bis 15, das den Schritt umfasst:

- Verwenden der zweiten Kommunikationsressourcen

-- nur für Kommunikationen gemäß dem ersten Kommunikationsstandardtyp oder
-- nur für Kommunikationen gemäß dem zweiten Kommunikationsstandardtyp oder

-- für Kommunikationen gemäß dem ersten Kommunikationsstandardtyp und für Kommunikationen gemäß dem zweiten Kommunikationsstandardtyp.

17. Verfahren nach einem der vorhergehenden Ansprüche, das den Schritt umfasst:

- Steuern der Verwendung der ersten Kommunikationsressourcen, so dass Kommunikationen gemäß dem ersten Kommunikationsstandardtyp im Verhältnis zu Kommunikationen gemäß dem zweiten Kommunikationsstandardtyp priorisiert werden.

18. Verfahren nach einem der Ansprüche 3 bis 17, das den Schritt umfasst:

- Steuern der Verwendung der zweiten Kommunikationsressourcen, so dass Kommunikationen gemäß dem zweiten Kommunikationsstandardtyp im Verhältnis zu Kommunikationen gemäß dem ersten Kommunikationsstandardtyp priorisiert werden.

19. Kommunikationsumgebung, die dazu ausgelegt ist,

- erste Kommunikationsressourcen <TG> für Kommunikationen gemäß einem ersten Kommunikationsstandardtyp für Kommunikationen gemäß einem zweiten Kommunikationsstandardtyp zu verwenden und
- die Verwendung der ersten Kommunikationsressourcen <TG> für Kommunikationen gemäß dem ersten Kommunikationsstandardtyp in Abhängigkeit von Kommunikationen zu steuern, die gemäß dem zweiten Kommunikationsstandardtyp auszuführen sind,
**dadurch gekennzeichnet, dass**
- die ersten Kommunikationsressourcen eine erste Rahmenstruktur umfassen, die zumindest eine Übertragungslücke <TG> umfasst,
- die Kommunikationsumgebung dazu ausgelegt ist, die Verwendung der ersten Kommunikationsressourcen durch Steuern einer Anzahl und/oder einer Dauer der zumindest einen Übertragungslücke <TG> zu steuern, und
- die Kommunikationsumgebung dazu ausgelegt ist, die Verwendung der zumindest einen Übertragungslücke <TG> für Kommunikationen gemäß dem zweiten Kommunikationsstandardtyp zu steuern.

20. Kommunikationsumgebung nach Anspruch 19, die dazu ausgelegt ist,

- die Verwendung der ersten Kommunikationsressourcen <TG> für Kommunikationen gemäß dem ersten Kommunikationsstandardtyp in Abhängigkeit von Kommunikationen zu steuern, die gemäß dem ersten Kommunikationsstandardtyp auszuführen sind.

21. Kommunikationsumgebung nach Anspruch 19 oder 20, die dazu ausgelegt ist,

- zweite Kommunikationsressourcen für Kommunikationen gemäß dem zweiten Kommunikationsstandardtyp für Kommunikationen gemäß dem ersten Kommunikationsstandardtyp zu verwenden und
- die Verwendung der zweiten Kommunikationsressourcen für Kommunikationen gemäß dem zweiten Kommunikationsstandardtyp in Abhängigkeit von Kommunikationen zu steuern, die gemäß dem ersten Kommunikationsstandardtyp auszuführen sind.

22. Kommunikationsumgebung nach Anspruch 21, wobei

- die zweiten Kommunikationsressourcen eine zweite Rahmenstruktur für Kommunikationen gemäß dem zweiten Kommunikationsstandardtyp umfassen und
- die Kommunikationsumgebung dazu ausgelegt ist, die Verwendung der zweiten Kommunikationsressourcen durch Steuern einer Anzahl und/oder einer Dauer zumindest eines Teils der zweiten Rahmenstruktur zu steuern, die für Kommunikationen gemäß dem zweiten Kommunikationstandardtyp verwendet wird.

23. Kommunikationsumgebung nach Anspruch 21 oder 22, die dazu ausgelegt ist,

- die Verwendung der zweiten Kommunikationsressourcen für Kommunikationen gemäß dem zweiten Kommunikationsstandardtyp in Abhängigkeit von Kommunikationen zu steuern, die gemäß dem zweiten Kommunikationsstandardtyp auszuführen sind.

**24.** Kommunikationsumgebung

- nach einem der Ansprüche 19 bis 22, wobei die ersten Kommunikationsressourcen einen ersten Frequenzbereich umfassen und/oder
- nach einem der Ansprüche 21 bis 23, wobei die zweiten Kommunikationsressourcen einen zweiten Frequenzbereich umfassen.

**25.** Kommunikationsumgebung nach Anspruch 24, wobei

- sich der erste Frequenzbereich und der zweite Frequenzbereich zumindest teilweise überlappen.

**26.** Kommunikationsumgebung

- nach einem der Ansprüche 19 bis 25, die dazu ausgelegt ist, die Verwendung der ersten Kommunikationsressourcen für einen geografischen Bereich zu steuern, für den sowohl Kommunikationen gemäß dem ersten Kommunikationsstandardtyp als auch Kommunikationen gemäß dem zweiten Kommunikationsstandardtyp vorgesehen sind; und/oder
- nach einem der Ansprüche 21 bis 25, die dazu ausgelegt ist, die Verwendung der zweiten Kommunikationsressourcen für einen geografischen Bereich zu steuern, für den sowohl Kommunikationen gemäß dem ersten Kommunikationsstandardtyp als auch Kommunikationen gemäß dem zweiten Kommunikationsstandardtyp vorgesehen sind.

**27.** Kommunikationsumgebung

- nach einem der Ansprüche 19 bis 24, die dazu ausgelegt ist, die Verwendung der ersten Kommunikationsressourcen in Abhängigkeit von einem momentanen Kommunikationsverkehr gemäß dem zweiten Kommunikationsstandardtyp und/oder einem erwarteten Kommunikationsverkehr gemäß dem zweiten Kommunikationsstandardtyp und/oder verfügbaren Kommunikationsressourcen für Kommunikationen gemäß dem zweiten Kommunikationsstandardtyp zu steuern; und/oder
- nach einem der Ansprüche 21 bis 26, die dazu ausgelegt ist, die Verwendung der ersten Kommunikationsressourcen in Abhängigkeit von einem momentanen Kommunikationsverkehr gemäß dem ersten Kommunikationsstandardtyp und/oder einem erwarteten Kommunikationsverkehr gemäß dem ersten Kommunikationsstandardtyp und/oder verfügbaren Kommunikationsressourcen für Kommunikationen gemäß dem ersten Kommunikationsstandardtyp zu steuern.

**28.** Kommunikationsumgebung

- nach einem der Ansprüche 21 bis 27, die dazu ausgelegt ist, die Verwendung der zweiten Kommunikationsressourcen in Abhängigkeit von einem momentanen Kommunikationsverkehr gemäß dem ersten Kommunikationsstandardtyp und/oder einem erwarteten Kommunikationsverkehr gemäß dem ersten Kommunikationsstandardtyp und/oder verfügbaren Kommunikationsressourcen für Kommunikationen gemäß dem ersten Kommunikationsstandardtyp zu steuern; und/oder
- nach einem der Ansprüche 23 bis 27, die dazu ausgelegt ist, die Verwendung der zweiten Kommunikationsressourcen in Abhängigkeit von einem momentanen Kommunikationsverkehr gemäß dem zweiten Kommunikationsstandardtyp und/oder einem erwarteten Kommunikationsverkehr gemäß dem zweiten Kommunikationsstandardtyp und/oder verfügbaren Kommunikationsressourcen für Kommunikationen gemäß dem zweiten Kommunikationsstandardtyp zu steuern.

**29.** Kommunikationsumgebung

- nach einem der Ansprüche 19 bis 28, wobei die ersten Kommunikationsressourcen von der ersten Kommunikationsumgebung umfasst sind, was zu Kommunikationen gemäß dem ersten Kommunikationsstandardtyp führt; und/oder
- nach einem der Ansprüche 21 bis 28, wobei die ersten Kommunikationsressourcen und die zweiten Kommunikationsressourcen von der ersten Kommunikationsumgebung umfasst sind, was zu Kommunikationen sowohl gemäß dem ersten Kommunikationsstandardtyp als auch Kommunikationen gemäß dem zweiten Kommunikationsstandardtyp führt.

30. Kommunikationsumgebung nach einem der Ansprüche 21 bis 29, wobei

- die ersten Kommunikationsressourcen von der ersten Kommunikationsumgebung umfasst sind, was zu Kommunikationen gemäß dem ersten Kommunikationsstandardtyp führt, und
- die zweiten Kommunikationsressourcen von einer zweiten Kommunikationsumgebung umfasst sind, was zu Kommunikationen gemäß dem zweiten Kommunikationsstandardtyp führt.

31. Kommunikationsumgebung nach einem der Ansprüche 19 bis 30, die dazu ausgelegt ist,

- Informationen, die einen momentanen Kommunikationsverkehr gemäß dem zweiten Kommunikationsstandardtyp und/oder einen erwarteten Kommunikationsverkehr gemäß dem zweiten Kommunikationsstandardtyp und/oder verfügbare Kommunikationsressourcen für Kommunikationen gemäß dem zweiten Kommunikationsstandardtyp anzeigen, an die ersten Kommunikationsressourcen zu kommunizieren, um die Verwendung der ersten Kommunikationsressourcen zu steuern.

32. Kommunikationsumgebung nach einem der Ansprüche 21 bis 31, die dazu ausgelegt ist,

- Informationen, die einen momentanen Kommunikationsverkehr gemäß dem ersten Kommunikationsstandardtyp und/oder einen erwarteten Kommunikationsverkehr gemäß dem ersten Kommunikationsstandardtyp und/oder verfügbare Kommunikationsressourcen für Kommunikationen gemäß dem ersten Kommunikationsstandardtyp anzeigen, an die zweiten Kommunikationsressourcen zu kommunizieren, um die Verwendung der zweiten Kommunikationsressourcen zu steuern.

33. Kommunikationsumgebung nach einem der Ansprüche 19 bis 32, wobei die ersten Kommunikationsressourcen

- nur für Kommunikationen gemäß dem ersten Kommunikationsstandardtyp verwendet werden oder
- nur für Kommunikationen gemäß dem zweiten Kommunikationsstandardtyp verwendet werden oder
- für Kommunikationen gemäß dem ersten Kommunikationsstandardtyp und für Kommunikationen gemäß dem zweiten Kommunikationsstandardtyp verwendet werden.

34. Kommunikationsumgebung nach einem der Ansprüche 21 bis 33, wobei die zweiten Kommunikationsressourcen

- nur für Kommunikationen gemäß dem ersten Kommunikationsstandardtyp verwendet werden oder
- nur für Kommunikationen gemäß dem zweiten Kommunikationsstandardtyp verwendet werden oder
- für Kommunikationen gemäß dem ersten Kommunikationsstandardtyp und für Kommunikationen gemäß dem zweiten Kommunikationsstandardtyp verwendet werden.

35. Kommunikationsumgebung nach einem der Ansprüche 19 bis 34, wobei

- die Verwendung der ersten Kommunikationsressourcen so gesteuert wird, dass Kommunikationen gemäß dem ersten Kommunikationsstandardtyp im Verhältnis zu Kommunikationen gemäß dem zweiten Kommunikationsstandardtyp priorisiert werden.

36. Kommunikationsumgebung nach einem der Ansprüche 21 bis 35, wobei

- die Verwendung der zweiten Kommunikationsressourcen so gesteuert wird, dass Kommunikationen gemäß dem zweiten Kommunikationsstandardtyp im Verhältnis zu Kommunikationen gemäß dem ersten Kommunikationsstandardtyp priorisiert werden.

37. Funkbasisstation für eine Kommunikationsumgebung, die dazu ausgelegt ist, gemäß den Schritten eines der Ansprüche 1 bis 18 betrieben zu werden.

38. Computerprogrammprodukt, das Programmcodeabschnitte zum Durchführen der Schritte gemäß einem der Ansprüche 1 bis 18 umfasst.

39. Computerprogrammprodukt nach Anspruch 38, das auf einem computerlesbaren Speichermedium oder in einer computerlesbaren Speichervorrichtung gespeichert ist.

**Revendications**

1. Procédé d'exploitation d'un premier environnement de communications, pour lequel des premières ressources de communications <TG, pour « *Transmission Gap* » - Intervalle de transmission> sont fournies, destinées à des communications selon un premier type de norme de communications, comprenant les étapes consistant à :

   - utiliser les premières ressources de communications pour des communications selon le premier type de norme de communications,
   - utiliser les premières ressources de communications pour des communications selon un second type de norme de communications, et
   - commander l'utilisation des premières ressources de communications à utiliser pour des communications selon le premier type de norme de communications en fonction de communications à exécuter selon le second type de norme de communications,

   **caractérisé par** les étapes consistant à :

   - communiquer selon le premier type de norme de communications en utilisant une première structure de trame comprenant au moins un intervalle de transmission <TG>,
   - commander l'utilisation des premières ressources de communications en commandant au moins un nombre ou une durée dudit au moins un intervalle de transmission <TG>, et
   - utiliser ledit au moins un intervalle de transmission <TG> pour des communications selon le second type de norme de communications.

2. Procédé selon la revendication 1, comprenant l'étape consistant à :

   - commander l'utilisation des premières ressources de communications <TG> pour des communications selon le premier type de norme de communications en fonction de communications à exécuter selon le premier type de norme de communications.

3. Procédé selon la revendication 1 ou 2, comprenant les étapes consistant à :

   - utiliser des secondes ressources de communications fournies destinées à des communications selon le second type de norme de communications pour des communications selon le premier type de norme de communications, et
   - commander l'utilisation des secondes ressources de communications destinées à des communications selon le second type de norme de communications en fonction de communications à exécuter selon le premier type de norme de communications.

4. Procédé selon la revendication 3, comprenant les étapes consistant à :

   - communiquer selon le second type de norme de communications en utilisant une seconde structure de trame, et
   - commander l'utilisation des secondes ressources de communications en commandant au moins un nombre ou une durée d'au moins une partie de la seconde structure de trame utilisée pour des communications selon le second type de norme de communications.

5. Procédé selon la revendication 3 ou 4, comprenant l'étape consistant à :

   - commander l'utilisation des secondes ressources de communications destinées à des communications selon le second type de norme de communications en fonction de communications à exécuter selon le second type de norme de communications.

6. Procédé

   - selon l'une des revendications précédentes, dans lequel les premières ressources de communications incluent une première plage de fréquences, et/ou
   - selon l'une des revendications 3 à 5, dans lequel les secondes ressources de communications incluent une seconde plage de fréquences.

**7.** Procédé selon la revendication 6, dans lequel la première plage de fréquences et la seconde plage de fréquences se superposent au moins partiellement.

**8.** Procédé

- selon l'une des revendications précédentes, comprenant l'étape consistant à :

-- commander l'utilisation des premières ressources de communications pour une région géographique dans laquelle sont fournies à la fois des communications selon le premier type de norme de communications et des communications selon le second type de norme de communications, et/ou

- selon l'une des revendications 3 à 7, comprenant l'étape consistant à :

-- commander l'utilisation des secondes ressources de communications pour une région géographique dans laquelle sont fournies à la fois des communications selon le premier type de norme de communications et des communications selon le second type de norme de communications.

**9.** Procédé

- selon l'une des revendications précédentes, comprenant l'étape consistant à :

-- commander l'utilisation des premières ressources de communications en fonction d'au moins un des facteurs suivants : trafic courant de communications selon le second type de norme de communications, trafic attendu de communications selon le second type de norme de communications et ressources de communications disponibles pour des communications selon le second type de norme de communications, et/ou

- selon l'une des revendications 2 à 8, comprenant l'étape consistant à :

-- commander l'utilisation des premières ressources de communications en fonction d'au moins un des facteurs suivants : trafic courant de communications selon le premier type de norme de communications, trafic attendu de communications selon le premier type de norme de communications et ressources de communications disponibles pour des communications selon le premier type de norme de communications.

**10.** Procédé

- selon l'une des revendications 3 à 9, comprenant l'étape consistant à :

-- commander l'utilisation des secondes ressources de communications en fonction d'au moins un des facteurs suivants : trafic courant de communications selon le premier type de norme de communications, trafic attendu de communications selon le premier type de norme de communications et ressources de communications disponibles pour des communications selon le premier type de norme de communications, et/ou

- selon l'une des revendications 5 à 9, comprenant l'étape consistant à :

-- commander l'utilisation des secondes ressources de communications en fonction d'au moins un des facteurs suivants : trafic courant de communications selon le second type de norme de communications, trafic attendu de communications selon le second type de norme de communications et ressources de communications disponibles pour des communications selon le second type de norme de communications.

**11.** Procédé

- selon l'une des revendications précédentes, comprenant l'étape consistant à :

-- fournir les premières ressources de communications sous la forme de ressources incluses dans le premier environnement de communications, fournissant des communications selon le premier type de norme de communications, et/ou

- selon l'une des revendications 3 à 10, comprenant l'étape consistant à :

-- fournir les premières ressources de communications et les secondes ressources de communications sous la forme de ressources incluses dans le premier environnement de communications, fournissant à la fois des communications selon le premier type de norme de communications et des communications selon le second type de norme de communications.

**12.** Procédé selon l'une des revendications 3 à 11, comprenant les étapes consistant à :

- fournir les premières ressources de communications sous la forme de ressources incluses dans le premier environnement de communications, fournissant des communications selon le premier type de norme de communications, et
- fournir les secondes ressources de communications sous la forme de ressources incluses dans un second environnement de communications, fournissant des communications selon le second type de norme de communications.

**13.** Procédé selon l'une des revendications précédentes, comprenant l'étape consistant à :

- communiquer aux premières ressources de communications des informations indiquant au moins l'un des facteurs suivants : trafic courant de communications selon le second type de norme de communications, trafic attendu de communications selon le second type de norme de communications et ressources de communications disponibles pour des communications selon le second type de norme de communications, afin de commander l'utilisation des premières ressources de communications.

**14.** Procédé selon l'une des revendications 3 à 13, comprenant l'étape consistant à :

- communiquer aux secondes ressources de communications des informations indiquant au moins l'un des facteurs suivants : trafic courant de communications selon le premier type de norme de communications, trafic attendu de communications selon le premier type de norme de communications et ressources de communications disponibles pour des communications selon le premier type de norme de communications, afin de commander l'utilisation des secondes ressources de communications.

**15.** Procédé selon l'une des revendications précédentes, comprenant l'étape consistant à :

- utiliser les premières ressources de communications pour :

-- uniquement des communications selon le premier type de norme de communications, ou
-- uniquement des communications selon le second type de norme de communications, ou
-- des communications selon le premier type de norme de communications et des communications selon le second type de norme de communications.

**16.** Procédé selon l'une des revendications 3 à 15, comprenant l'étape consistant à :

- utiliser les secondes ressources de communications pour:

-- uniquement des communications selon le premier type de norme de communications, ou
-- uniquement des communications selon le second type de norme de communications, ou
-- des communications selon le premier type de norme de communications et des communications selon le second type de norme de communications.

**17.** Procédé selon l'une des revendications précédentes, comprenant l'étape consistant à :

- commander l'utilisation des premières ressources de communications de telle manière que des communications selon le premier type de norme de communications soient prioritaires par rapport à des communications selon le second type de norme de communications.

**18.** Procédé selon l'une des revendications 3 à 17, comprenant l'étape consistant à :

- commander l'utilisation des secondes ressources de communications de telle manière que des communications selon le second type de norme de communications soient prioritaires par rapport à des communications selon le premier type de norme de communications.

**19.** Environnement de communications adapté afin de :

- utiliser des premières ressources de communications <TG> destinées à des communications selon un premier type de norme de communications, pour des communications selon un second type de norme de communications, et
- commander l'utilisation des premières ressources de communications <TG> destinées à des communications selon le premier type de norme de communications, en fonction de communications à exécuter selon le second type de norme de communications,

**caractérisé en ce que** :

- les premières ressources de communications comprennent une première structure de trame incluant au moins un intervalle de transmission <TG>,
- l'environnement de communications est adapté pour commander l'utilisation des premières ressources de communications en commandant au moins un nombre ou une durée dudit au moins un intervalle de transmission <TG>, et
- l'environnement de communications est adapté pour commander l'utilisation dudit au moins un intervalle de transmission <TG> pour des communications selon le second type de norme de communications.

**20.** Environnement de communications selon la revendication 19, adapté afin de commander l'utilisation des premières ressources de communications <TG> destinées à des communications selon le premier type de norme de communications, en fonction de communications à exécuter selon le premier type de norme de communications.

**21.** Environnement de communications selon la revendication 19 ou 20, adapté afin de :

- utiliser des secondes ressources de communications destinées à des communications selon le second type de norme de communications, pour des communications selon le premier type de norme de communications, et
- commander l'utilisation des secondes ressources de communications destinées à des communications selon le second type de norme de communications, en fonction de communications à exécuter selon le premier type de norme de communications.

**22.** Environnement de communications selon la revendication 21, dans lequel :

- les secondes ressources de communications comprennent une seconde structure de trame pour la communication selon le second type de norme de communications, et
- l'environnement de communications est adapté afin de commander l'utilisation des secondes ressources de communications en commandant au moins un nombre ou une durée d'au moins une partie de la seconde structure de trame, utilisée pour des communications selon le second type de norme de communications.

**23.** Environnement de communications selon la revendication 21 ou 22, adapté afin de commander l'utilisation des secondes ressources de communications destinées à des communications selon le second type de norme de communications, en fonction de communications à exécuter selon le second type de norme de communications.

**24.** Environnement de communications,

- selon l'une des revendications 19 à 22, dans lequel les premières ressources de communications incluent une première plage de fréquences, et/ou
- selon l'une des revendications 21 à 23, dans lequel les secondes ressources de communications incluent une seconde plage de fréquences.

**25.** Environnement de communications selon la revendication 24, dans lequel la première plage de fréquences et la seconde plage de fréquences se superposent au moins partiellement.

**26.** Environnement de communications

- selon l'une des revendications 19 à 25, adapté afin de commander l'utilisation des premières ressources de communications pour une région géographique dans laquelle sont fournies à la fois des communications selon le premier type de norme de communications et des communications selon le second type de norme de communications, et/ou

- selon l'une des revendications 21 à 25, adapté afin de commander l'utilisation des secondes ressources de communications pour une région géographique dans laquelle sont fournies à la fois des communications selon le premier type de norme de communications et des communications selon le second type de norme de communications.

**27.** Environnement de communications

- selon l'une des revendications 19 à 24, adapté afin de commander l'utilisation des premières ressources de communications en fonction d'au moins un des facteurs suivants : trafic courant de communications selon le second type de norme de communications, trafic attendu de communications selon le second type de norme de communications et ressources de communications disponibles pour des communications selon le second type de norme de communications, et/ou

- selon l'une des revendications 21 à 26, adapté afin de commander l'utilisation des premières ressources de communications en fonction d'au moins un des facteurs suivants : trafic courant de communications selon le premier type de norme de communications, trafic attendu de communications selon le premier type de norme de communications et ressources de communications disponibles pour des communications selon le premier type de norme de communications.

**28.** Environnement de communications

- selon l'une des revendications 21 à 27, adapté afin de commander l'utilisation des secondes ressources de communications en fonction d'au moins un des facteurs suivants : trafic courant de communications selon le premier type de norme de communications, trafic attendu de communications selon le premier type de norme de communications et ressources de communications disponibles pour des communications selon le premier type de norme de communications, et/ou

- selon l'une des revendications 23 à 27, adapté afin de commander l'utilisation des secondes ressources de communications en fonction d'au moins un des facteurs suivants : trafic courant de communications selon le second type de norme de communications, trafic attendu de communications selon le second type de norme de communications et ressources de communications disponibles pour des communications selon le second type de norme de communications.

**29.** Environnement de communications

- selon l'une des revendications 19 à 28, dans lequel les premières ressources de communications sont incluses dans le premier environnement de communications, fournissant des communications selon le premier type de norme de communications, et/ou

- selon l'une des revendications 21 à 28, dans lequel les premières ressources de communications et les secondes ressources de communications sont incluses dans le premier environnement de communications, fournissant à la fois des communications selon le premier type de norme de communications et des communications selon le second type de norme de communications.

**30.** Environnement de communications selon l'une des revendications 21 à 29, dans lequel :

- les premières ressources de communications sont incluses dans le premier environnement de communications, fournissant des communications selon le premier type de norme de communications, et

- les secondes ressources de communications sont incluses dans un second environnement de communications, fournissant des communications selon le second type de norme de communications.

**31.** Environnement de communications selon l'une des revendications 19 à 30, adapté afin de communiquer aux premières ressources de communications des informations indiquant au moins l'un des facteurs suivants : trafic courant de communications selon le second type de norme de communications, trafic attendu de communications selon le second type de norme de communications et ressources de communications disponibles pour des communications selon le second type de norme de communications, afin de commander l'utilisation des premières ressources de communications.

**32.** Environnement de communications selon l'une des revendications 21 à 31, adapté afin de communiquer aux secondes ressources de communications des informations indiquant au moins l'un des facteurs suivants : trafic courant de communications selon le premier type de norme de communications, trafic attendu de communications selon le premier type de norme de communications et ressources de communications disponibles pour des communications selon le premier type de norme de communications, afin de commander l'utilisation des secondes ressources de communications.

**33.** Environnement de communications selon l'une des revendications 19 à 32, dans lequel les premières ressources de communications sont utilisées :

- uniquement pour des communications selon le premier type de norme de communications, ou
- uniquement pour des communications selon le second type de norme de communications, ou
- pour des communications selon le premier type de norme de communications et des communications selon le second type de norme de communications.

**34.** Environnement de communications selon l'une des revendications 21 à 33, dans lequel les secondes ressources de communications sont utilisées :

- uniquement pour des communications selon le premier type de norme de communications, ou
- uniquement pour des communications selon le second type de norme de communications, ou
- pour des communications selon le premier type de norme de communications et des communications selon le second type de norme de communications.

**35.** Environnement de communications selon l'une des revendications 19 à 34, dans lequel l'utilisation des premières ressources de communications est commandée de telle manière que des communications selon le premier type de norme de communications soient prioritaires par rapport à des communications selon le second type de norme de communications.

**36.** Environnement de communications selon l'une des revendications 21 à 35, dans lequel l'utilisation des secondes ressources de communications est commandée de telle manière que des communications selon le second type de norme de communications soient prioritaires par rapport à des communications selon le premier type de norme de communications.

**37.** Station de base radio pour un environnement de communications adapté pour être exploité selon les étapes de l'une des revendications 1 à 18.

**38.** Progiciel d'ordinateur, comprenant des portions de code de programme destinées à exécuter les étapes selon l'une des revendications 1 à 18.

**39.** Progiciel d'ordinateur selon la revendication 38, stocké sur un support de stockage lisible par ordinateur ou dans un dispositif de stockage lisible par ordinateur.

**Figure 1: Frame structure for uplink DPDCH/DPCCH**

**Figure 2: Frame structure for downlink DPCH**

52 TDMA Frames

| B0 | B1 | B2 | T | B3 | B4 | B5 | X | B6 | B7 | B8 | T | B9 | B10 | B11 | X |

X = Idle frame
T = Frame used for PTCCH
B0 - B11 = Radio blocks

## Figure 3: Multiframe structure for PDCH

One frame
(10 ms)

Transmission gap available for
inter-frequency measurements

## Figure 4: Compressed mode transmission

**Figure 5: Frame structure in uplink compressed transmission**

(a) Frame structure type A

(b) Frame structure type B

**Figure 6: Frame structure types in downlink compressed transmission**

Transmission gap

Radio frame

#0    #N$_{first}$-1    #N$_{last}$+1    #14

(1) Single-frame method

First radio frame

Transmission gap

Second radio frame

#0    #N$_{first}$-1    #N$_{last}$+1    #14

(2) Double-frame method

## Figure 7: Transmission gap positioning

Figure 8: Transmission gap positions

**Figure 9: Mapping of TDMA and W-CDMA frames**

| Ba,Bb | Bursts belonging to radio block B0' |
| Bc,Bd | Bursts belonging to radio block B1' |
| X | Idle frame |

**Figure 10: Modified TDMA frame structure**

EP 1 574 096 B1

2^{nd} communications environment
frame = s2 slots

f2 2^{nd} communications environment frames
("2^{nd} communications environment
frame structure or superior frame")

(b)

t2    Tmin_comm

t_{off}

1^{st} communications environment frame = s1 slots

t_{per}

(a)

t1

TGL

Tmin_comm

f1 1^{st} communications environment frames
("1^{st} communications environment
frame structure or superior frame")

| | |
|---|---|
| ☐ 1^{st} communications environment frame (e.g. W-CDMA frame) | ☐ 2^{nd} communications environment frame (e.g. GSM/GPRS frame) |
| ▨ 1^{st} communications environment frame with transmission gap (configured "idle slots") | ▨ 2^{nd} communications environment frame (or at least slots of it) usable for traffic transmitted in 1^{st} communications environment |

**Figure 11: Mapping of a first frame structure to a second frame structure**

Sychronisation of Timing Units in
order to achieve aligned frame timing

Timing
Unit

Timing
Unit

W-CDMA
Base Station
Equipment

TDMA
GPRS/EGPRS
Base Station
Equipment

W-CDMA RBS

TDMA (E)GPRS RBS

(B)

**Figure 12: TDMA and W-CDMA single-mode radio base stations**

Dual-Mode RBS

(A)

**Figure 13: Dual-mode radio base station**

**Figure 14: Variable duplex distance for a FDD TDD spectrum sharing**

Normal TDD Radio Frame

Figure 15: Conventional TDD frame structure

Shared TDD Radio Frame

Shared Time slot e. g. High speed shared channels
used by the FDD system

↑ UL    ↓ DL         ↓ DL shared channel

**Figure 16: TDD frame structure for TDD/FDD spectrum sharing**

Figure 17: Mapping of a first frame structure to a second frame structure

frequency

Dedicated frequency range 1 (f1)

W-CDMA traffic only

Shared frequency block (fs)

Can be used for mixed
W-CDMA - (E)GPRS traffic

5 MHz

Dedicated frequency range 2 (f2)

GSM / (E)GPRS traffic only
(e.g. BCCH carriers allocated here)

**Figure 18**

BSC/PCU

Abis

lur-g

RNC

lub

SRE

MTC-ID =
„Kista25a"

W-CDMA:
(E)GPRS:

MTC-ID =
„Kista25b"

W-CDMA:
(E)GPRS:

SRE = Synchronised RBS Equipment

where $f_x'$ and $f_x''$ are suitable carrier
frequencies out of frequency range $f_x$

**Figure 19**

| Geographical areas which shall support the mixed traffic operation (i.e. MTCs) must be identified by network operator. |
|---|

| An unique identifier (e.g. number or string) is assigned to each MTC (i.e. to cells and cell carriers belonging to a MTC) in order to allow exchange of cell related data. |
|---|

Initial management activities (1)

| Each cell/cell carrier belonging to a MTC reports its capacity demands (or alternatively its resource status) towards a control entity. | (2) |
|---|---|

| Based on the reported figures the control entity decides which operation mode and configuration shall be applied (see control algorithm description). | (3) |
|---|---|

| The RBSs are configured and traffic is scheduled according to the selected operation mode. | (4) |
|---|---|

Activities during traffical operation

**Figure 20**

a) logical view

b) implementation view

**Figure 21**

**Figure 22**

(E)GPRS capacity demand
[no. of requested resources]

configure $f_S$
for GSM/(E)GPRS
traffic only

configure $f_S$
for mixed traffic

max. available
resources in $f_2$      $c_2$

default

configure $f_S$
for W-CDMA
traffic only

$c_W$

$c_1$
max. available
resources in $f_1$

W-CDMA capacity demand
[no. of requested resources]

**Figure 23**

Figure 24

$c^n_{1S}$ : total available W-CDMA traffic capacity in $f_1$ and $f_S$, when conf. n used for $f_S$
$c^n_{2S}$ : total available (E)GPRS traffic capacity in $f_2$ and $f_S$, when conf. n used for $f_S$

**Figure 25**

**Figure 26**

55

□ W-CDMA frame

▓ W-CDMA with transmission gap

▨ TDMA frame usable for GPRS/EGRPS traffic

||||||| TDMA frame = 8 time slots

**Conf. 2**

4.615ms

240ms

52 TDMA frames

||||||||||| W-CDMA frame = 15 slots

$t_{off}$

$t_{px}$

10ms

TGL

120ms

120ms

12 W-CDMA frames

12 W-CDMA frame

TGL = 9.333 ms (for 14 consecutive idle slots, i.e. maximum according to current standard)
$t_{px}$ = 60 ms ( = 6 W-CDMA frames = 13 TDMA frames)

**Figure 27**

EP 1 574 096 B1

W-CDMA frame

W-CDMA with transmission gap

TDMA frame usable for GPRS/EGRPS traffic

**Conf. 3**

4.615ms

240ms

52 TDMA frames

$t_{off}$

$t_{per}$

10ms

120ms

12 W-CDMA frames

TGL1

TGL2

120ms

12 W-CDMA frame

TGL1 = 9.333 ms (for 14 consecutive idle slots)
TGL2 = 5.333 ms (for 8 consecutive idle slots)
$t_{per}$ = 60 ms ( = 6 W-CDMA frames = 13 TDMA frames)

# Figure 28